# EUROPEAN PATENT SPECIFICATION

(11) **EP 1 634 422 B1**
(45) Date of publication and mention of the grant of the patent: **16.11.2016**
(21) Application number: 04748997.6
(22) Date of filing: 15.06.2004
(51) Int. Cl.: H04L 29/06, H04W 12/06, H04W 80/04

(54) **METHOD, SYSTEM AND APPARATUS TO SUPPORT HIERARCHICAL MOBILE IP SERVICES**
VERFAHREN, SYSTEM UND VORRICHTUNG ZUR UNTERSTÜTZUNG VON HIERARCHISCHEN MOBILE IP (HMIP) DIENSTEN
PROCEDE, SYSTEME ET APPAREIL DE SUPPORT DE SERVICES IP MOBILES HIERARCHIQUES

(30) Priority: 18.06.2003 US 479156 P; 09.03.2004 US 551039 P
(43) Date of publication of application: 15.03.2006
(73) Proprietor: Telefonaktiebolaget LM Ericsson (publ), 164 83 Stockholm (SE)
(72) Inventor: OYAMA, Johnson, Koto-ku, Tokyo 136-74 (JP); KATO, Ryoji, Yokusuka Kanagawa 239-0829 (JP); RUNE, Johan, S-181 30 Lidingö (SE); LARSSON, Tony, S-112 48 Stockholm (SE)
(74) Representative: Brann AB
(86) International application number: PCT/SE2004/000945
(87) International publication number: WO 2004/112347

(56) References cited:
- WO-A-03/014935
- US-A1- 2002 199 104
- H. SOLIMAN: "Hierarchical Mobile IPv6 and Fast Handoffs, draft-soliman-mobileip-hmipv6-00.txt" IETF DRAFT, 28 June 2000 (2000-06-28), XP002298253 IETF

## Description

### TECHNICAL FIELD OF THE INVENTION

The present invention generally relates to mobile communications, and in particular to support for Mobile IP (Internet Protocol) services, and especially Hierarchical Mobile IP version 6 services.

### BACKGROUND OF THE INVENTION

Mobile IP (MIP) allows a Mobile Node (MN) to change its point of attachment to the Internet with minimal service disruption. MIP in itself does not provide any specific support for mobility across different administrative domains, which limits the applicability of MIP in a large-scale commercial deployment.

The Mobile IP version 6 (MIPv6) protocol [1] allows nodes to move within the Internet topology while maintaining reachability and on-going connections with correspondent nodes. In this context, each mobile node is always identified by its home address, regardless of its current point of attachment to the IPv6 Internet. While situated away from its home network, a mobile node is also associated with a care-of address (CoA), which provides information about the mobile nodes current location. IPv6 packets addressed to the mobile node's home address are more or less transparently routed to its care-of address. The MIPv6 protocol enables IPv6 nodes to cache the binding of a mobile node's home address with its care-of address, and then send any packets destined for the mobile node to the care-of address. To this end, the mobile node sends so-called binding updates to its Home Agent (HA) and the correspondent nodes with which it is communicating, every time it moves. Authenticating binding updates requires some round trips between the mobile node and each correspondent node. In addition, one round trip is needed to update the Home Agent, although this can be done simultaneously while updating correspondent nodes.

These round trip delays will disrupt active connections every time a hand-off to a new access router is performed.

For this and other reasons, the Hierarchical Mobile IPv6 (HMIPv6) protocol [2] has been proposed to support local or hierarchical forms of mobility management. Hierarchical mobility management for Mobile IPv6 reduces the amount of signaling between the MN, its Correspondent Nodes (CN), and its HA by introducing a so-called Mobility Anchor Point (MAP) located in the visited network. The introduction of a MAP can also be used to improve the performance of Mobile IPv6 in terms of handoff speed.

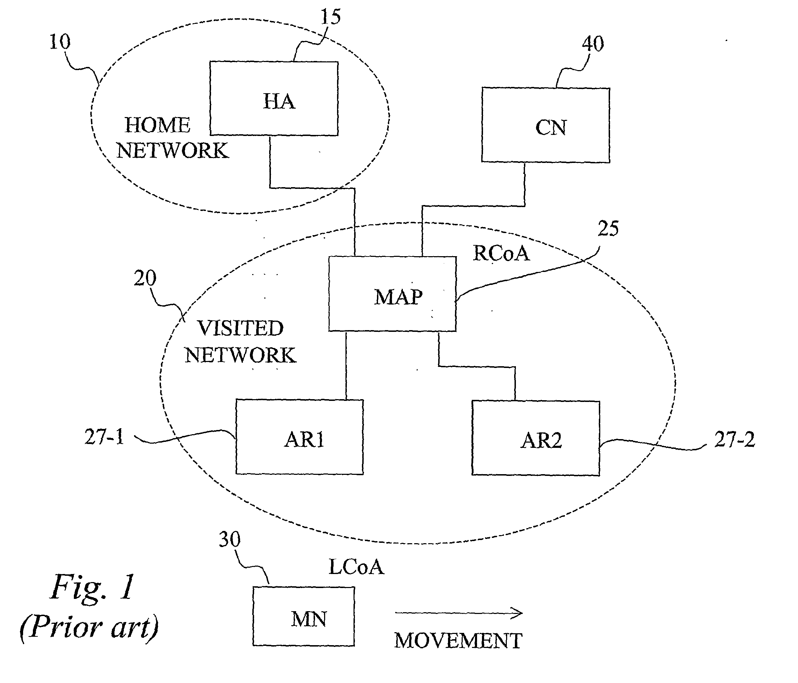

Fig. 1 schematically illustrates an example of a prior art HMIPv6 domain with a MAP in the visited network. The overall system view includes the home network 10 with an ordinary Home Agent (HA) 15, the visited network 20 with a MAP 25 and access routers (AR) 27. A mobile node (MN) 30 entering a MAP domain will receive so-called router advertisements containing information on one or more local MAPs. The MN 30 can bind its current location (on-link Care-of Address or LCoA) with an address on the MAP's subnet called Regional Care-of Address (RCoA). Acting as a local HA, the MAP 25 will receive all packets on behalf of the MN 30 it is serving and will encapsulate and forward them directly to the MN's LCoA.

The MAP can help in providing seamless mobility for the mobile node as it moves from Access Router 1 (AR1) 27-1 to Access Router 2 (AR2) 27-2, while communicating with a correspondent node (CN) 40. Upon arrival in the visited network, the mobile node 30 will discover the global address of the MAP 25. This address is stored in the access routers and communicated to the mobile node via router advertisements. This process is called MAP discovery and is needed to inform mobile nodes of the presence of the MAP. A MAP domain is normally defined by the access routers that advertise the MAP information to attached mobile nodes. The process of MAP discovery continues as the mobile node moves from one subnet to the next. As long as the mobile roams within a MAP domain, the access routers are configured to advertise the same MAP address or addresses. If a change in the advertised MAP's address is received, the mobile node must perform movement detection and send the necessary binding updates to its Home Agent and correspondent nodes.

If the mobile node is not HMIPv6-aware then no MAP discovery will be performed and Mobile IPv6 will be used for mobility management. On the other hand, if the mobile node is HMIPv6-aware, it should choose to use HMIPv6. If so, the mobile node registers with a MAP 25 by sending a binding update containing its home address and LCoA address. The home address used in the binding update is the RCoA address, and the MAP 25 stores this information in its binding cache to be able to forward packets to their final destination when received from the correspondent nodes 40 or HA 15.

HMIPv6 itself, as in the MIP case, does not provide any specific support for mobility across different administrative domains, which limits the applicability of HMIPv6 in a large-scale commercial deployment.

It can normally be expected that the MN would need to be authenticated first before being authorized to use the services of HMIPv6. It is important that the security relationship between the mobile node and the MAP is of strong nature; it should preferably involve mutual authentication, integrity protection and protection against replay attacks. To this end, distribution of credential-related data such as security keys between MN and MAP currently has to rely on Public Key Infrastructures (PKI) and other complex protocols. The current HMIPv6 draft [2] also limits the location of the MAP to the visited network.

Related art within this field is disclosed e.g. in US 2002/0199104, describing AAA servers in connection with a MAP, and that an AAAH server delivers service information to the MAP via the AAAL server, and utilizes existing messages of the DIAMETER protocol for authentication purposes. Other related art is disclosed e.g. in WO03/014935, which describes a technique for efficiently negotiating security association establishment between a mobile node connected to a wireless terminal and different network entities.

### SUMMARY OF THE INVENTION

The present invention overcomes these and other drawbacks of the prior art arrangements.

It is a general object of the present invention to provide improved support for HMIPv6 service for a mobile node. The solution should preferably include mechanisms that facilitate deployment of HMIPv6.

In particular it is desirable to provide a streamlined, yet robust solution for authentication and authorization of the HMIPv6 service that does not have to rely on Public Key Infrastructures (PKI) and other complex protocols.

It is another object of the invention to enable shortening of the overall HMIPv6 setup times.

Yet another object of the invention is to provide a method and a system for supporting HMIPv6 service.

Still another object of the invention is to provide individual network components that support streamlined authentication and/or authorization of the HMIPv6 service.

These and other objects are met by the invention as defined by the accompanying patent claims.

A basic feature of the invention is to rely on an AAA infrastructure to "bootstrap" the HMIPv6 service for a mobile node. In accordance with a preferred embodiment of the invention, bootstrapping the HMIPv6 service involves authenticating and authorizing the mobile node for HMIPv6 service based on an AAA infrastructure. In an important scenario, the mobile node is roaming in a visited network, and the AAA infrastructure links the visited network with the home network of the mobile node. However, the invention also supports the scenario when the mobile is actually located in the home network. In this case, an AAA infrastructure component of the home network may provide the necessary support for the HMIPv6 service with a MAP in the home network.

The reliance on the AAA infrastructure preferably involves transferring HMIPv6-related information required for authorizing the mobile node for HMIPv6 service over the AAA infrastructure.

HMIPv6 bootstrapping is normally based on the establishment of a security association between an appropriate MAP and the mobile node to secure pertinent communication, e.g. allowing authenticated HMIPv6 MAP binding.

In a preferred embodiment of the invention, piggyback of HMIPv6 mobility procedures in the same round trip as the HMIPv6 security association procedure allows possible shortening of overall setup times by optimizing authentication, authorization, and mobility in a common procedure.

The authorization phase naturally includes explicit authorization but may also include configuration of the involved nodes. HMIPv6-related configuration such as configuration of the mobile node and/or configuration of the MAP may therefore normally be regarded as part of the overall authorization procedure. This typically means that the HMIPv6-related information may be HMIPv6 authentication, authorization and/or configuration information.

Instead of the conventional MAP discovery process, the AAA infrastructure is preferably used for assigning an appropriate MAP to the mobile node, either in response to a MAP assignment request initiated from the mobile node (mobile-node-initiated MAP assignment) or as a network-initiated reassignment.

It has also been recognized that there are cases where it would be beneficial to have the MAP located in the home network or other networks, such as for the case where the visited network does not provide MAP support. A MAP located in the home network can be used to address the HA scalability issues, off-loading the HA by reducing the number of binding updates that go to the HA during intra-MAP domain mobility. By selecting the MAP to be topographically close to the location of the MN, fast handovers can be realized.

In cases when the MAP is located in the home network, it may be appropriate to use the AAA home network server (AAAh) as a suitable AAA infrastructure component for MAP assignment. On the other hand, when the MAP is located in the visited network it may be appropriate to use the AAA visited network server (AAAv) for MAP assignment. In fact, the location of MAP can be in the home network, visited network, or other networks. There is no longer any mandatory dependency on the Router Advertisements containing information on MAPs within pre-defined MAP domains.

The reliance on the AAA infrastructure, in contrast to using the PKI infrastructure, offers different possibilities for bootstrapping the HMIPv6 service. For example, it is possible to provide an extension to a general authentication protocol carried over the AAA infrastructure and/or to enhance an AAA framework protocol application.

For example, it has proven to be quite beneficial to transfer HMIPv6-related information within an authentication protocol in an end-to-end procedure between the mobile node and an AAA home network server. The authentication protocol may be an extended authentication protocol based on an existing protocol, or a new protocol.

A possible authentication protocol to be used as a basis for bootstrapping HMIPv6 is the Extensible Authentication Protocol (EAP), creating EAP extensions while preferably keeping the EAP lower layer(s) intact. This normally means that HMIPv6-related information is incorporated as additional data in the EAP protocol stack, for example as EAP attributes in the EAP method layer of the EAP protocol stack or transferred in a generic container on the EAP layer or the EAP method layer.

Another way, to be used as a complement or as an alternative to the EAP extensions, would be to enhance the EAP "lower layer(s)" like creating a new or extended AAA framework protocol application such as a Diameter application adapted for HMIPv6 or an application based on the Radius protocol.

When the MAP is located in the home network, it is for example possible to use an extended authentication protocol carried over the AAA infrastructure or an enhanced AAA framework protocol application. However, when the MAP is located in the visited network, an extended EAP protocol is preferably used in combination with an enhanced AAA framework protocol application, or alternatively the enhanced AAA framework protocol application is used without any support of any EAP extensions.

For example, an extended EAP protocol may be carried by PANA (Protocol for carrying Authentication for Network Access), PPP (Point-to-Point Protocol), IEEE 802.1X or even over GPRS/UMTS interfaces between the mobile node and an AAA client in the visited network, and by a Diameter or Radius application within the AAA infrastructure.

In particular, relying on EAP extensions provides a streamlined solution, which is manageable and elegant with a minimum of backward compatibility problems. The use of EAP allows the AAA Client (and AAAv) to be agnostic to HMIPv6 procedures (i.e., this removes the dependency on HMIPv6 support of the visited network), and act as mere pass-through agent(s), at least when the MAP is located in the home network. This is one of the major advantages of using EAP.

By also including MIPv6-related information in the extended authentication protocol stack or in the enhanced AAA framework protocol application it is possible to simultaneously accommodate HMIPv6 and MIPv6 authentication and authorization in the same round trip over the AAA infrastructure. It is of course possible to use such an MIPv6/HMIPv6-enabled network and execute only HMIPv6 authentication and/or authorization without the MIPv6 counterpart, and vice versa, depending on the particular need of the MN at a specific instance. This allows a single extended authentication protocol and/or enhanced AAA framework protocol application to be flexibly used on various use case scenarios.

The invention offers the following advantages:
- Efficient bootstrapping of the HMIPv6 service;
- Efficient transfer of HMIPv6-related information for authorizing the HMIPv6 service;
- Streamlined solution for HMIPv6 support based on EAP extension, which is manageable and elegant with a minimum of backward compatibility problems;
- Shortening of the overall HMIPv6 setup times;
- Optimization of authentication, authorization, and mobility in a common procedure;
- AAA-based MAP assignment;
- MAP-location not limited to visited network;
- MAP can be located in the home network to address the HA scalability issues, off-loading the HA by reducing the number of binding updates that go to the HA during intra-MAP domain mobility; and
- Simultaneous accommodation of HMIPv6 and MIPv6 authentication and authorization in the same round trip.

Other advantages offered by the present invention will be appreciated upon reading of the below description of the embodiments of the invention.

### BRIEF DESCRIPTION OF THE DRAWINGS

The invention, together with further objects and advantages thereof, will be best understood by reference to the following description taken together with the accompanying drawings, in which:
Fig. 1 is a schematic diagram illustrating an example of a prior art HMIPv6 domain with the MAP in the visited network;
Fig. 2 is a schematic diagram illustrating a novel architecture for HMIPv6 support for a mobile node roaming in a visited network according to an exemplary embodiment of the invention;
Fig. 3 is a schematic diagram illustrating a novel architecture for HMIPv6 support for a mobile node roaming in a visited network according to another exemplary embodiment of the invention;
Fig. 4 is a schematic diagram illustrating a novel architecture for HMIPv6 support for a mobile node operating in its own home network according to an exemplary embodiment of the invention;
Fig. 5 is a schematic block diagram of an AAA home network server according to a preferred exemplary embodiment of the invention;
Fig. 6 is a schematic block diagram of a MAP node according to a preferred exemplary embodiment of the invention;
Fig. 7 illustrates an exemplary signaling flow for HMIPv6 AAA using Diameter/EAP/HMIPv6 for the case when the MAP is located in the home network;
Fig. 8 illustrates an exemplary signaling flow for HMIPv6 AAA using Diameter/EAP/HMIPv6 in combination with a Diameter HMIPv6 Application for the case when the MAP is located in the visited network;
Fig. 9 illustrates an exemplary signaling flow for HMIPv6 AAA using Diameter HMIPv6 Application for the case when the MAP is located in the home network;
Fig. 10 illustrates an exemplary signaling flow for HMIPv6 AAA using Diameter HMIPv6 Application for the case when the MAP is located in the visited network; and
Fig. 11 is a schematic flow diagram of an illustrative example of a method for supporting HMIPv6 service for a mobile node.

### DETAILED DESCRIPTION OF EMBODIMENTS OF THE INVENTION

Throughout the drawings, the same reference characters will be used for corresponding or similar elements.

A basic idea according to the invention is to "bootstrap" the HMIPv6 service for a mobile node based on an AAA infrastructure, instead of relying on a complex PKI infrastructure for the purpose of HMIPv6 authentication and authorization. The HMIPv6 bootstrapping is valid both for a mobile node operating in the home network and a mobile node roaming in a visited network, employing the home network AAA infrastructure in the former case and the overall AAA infrastructure linking the visited network with the home network in the latter case.

Instead of establishing a security association and distributing security keys between MN and MAP by employing a Public Key Infrastructures (PKI), authentication and authorization of HMIPv6 service is preferably executed based on an AAA infrastructure, for example by transferring HMIPv6-related information required for authenticating and authorizing the mobile node for HMIPv6 service over the AAA infrastructure.

Instead of the conventional MAP discovery process, the AAA infrastructure is preferably also used for assigning an appropriate MAP to the mobile node, either in response to a MAP assignment request initiated from the mobile node (mobile-node-initiated MAP assignment) or as a network-initiated reassignment, as will be described in more detail later on. There is no longer any mandatory dependency on the Router Advertisements containing information on MAPs within pre-defined MAP domains.

The AAA HMIPv6 bootstrapping is normally based on the establishment of a security association, i.e. a security relation, between an appropriate MAP and the mobile node over the AAA infrastructure to secure pertinent communication, e.g. allowing authenticated HMIPv6 MAP binding.

In a preferred implementation, HMIPv6 mobility procedures including binding updates are piggybacked in the same round trip as the HMIPv6 security association procedure, thereby allowing possible shortening of overall setup times by optimizing authentication, authorization, and mobility in a common procedure.

The term "AAA" should be taken within its general meaning of Internet drafts, RFCs and other standardization documents. Typically, the authentication and security key agreement of an AAA (Authorization, Authentication, Accounting) infrastructure is based on symmetric cryptography, implying the existence of an initial secret shared between the mobile node and the home network operator or a trusted party. In some scenarios and applications, for example the accounting feature of the AAA infrastructure may be disabled or not implemented. The AAA infrastructure generally includes one or more AAA servers, in the home network, intermediate networks (if any) and/or the visited network, and may also include one or more AAA clients.

In general, AAA protocols such as the Diameter protocol precisely enable mobile users to roam and obtain service in networks that may not necessarily be owned by their home service provider. For Mobile IP to be deployed in commercial networks, there therefore has to be AAA support for the protocol. For the special case of Mobile IPv6 (MIPv6) without any hierarchical mobility management, an Internet draft [3] has been proposed which specifies a new application to Diameter that enables MIPv6 roaming in networks other than the network administered by the home operator. In our US Provisional Patent Application 60/479,156 filed June 18, 2003 and also in the later Internet draft [4] an architecture and related protocols for performing Mobile IPv6 authorization and configuration based on an AAA infrastructure are suggested. The necessary interaction between the AAA server of the home provider and the mobile node for MIPv6 is realized using EAP (Extensible Authentication Protocol), which convey information for Mobile IPv6 negotiation together with authentication data.

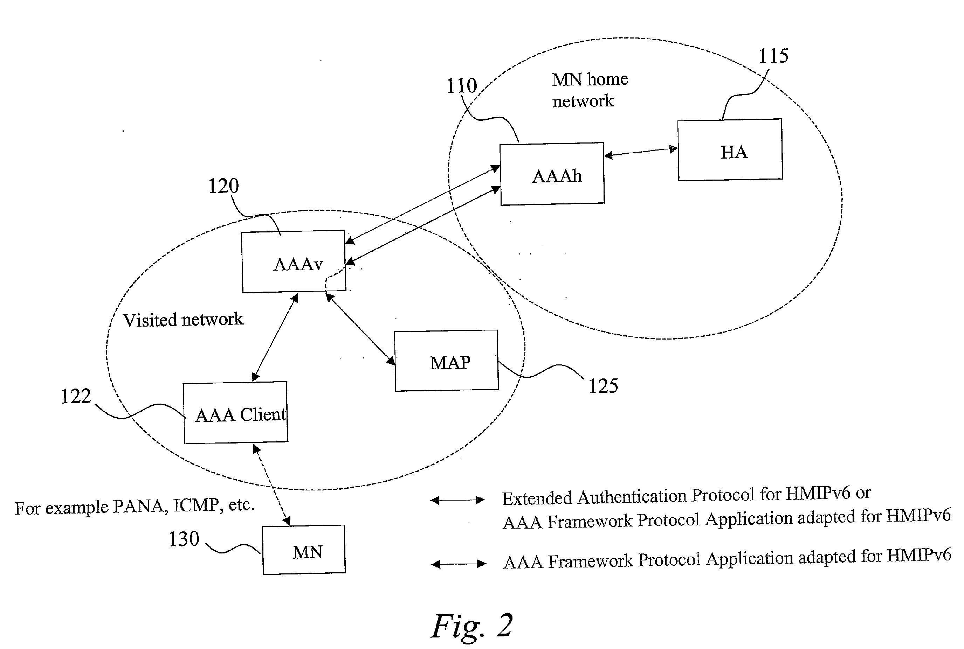

Fig. 2 is a schematic diagram illustrating a novel architecture for HMIPv6 support according to an exemplary embodiment of the invention. The mobile node 130 is roaming in a visited network, and HMIPv6 authentication and authorization is performed by using an AAA infrastructure linking the visited network and the home network of the mobile node. In this example, the AAA infrastructure basically involves an AAA home network server 110, an AAA visited network server 120 and an AAA client 122 in the visited network.

Preferably, the AAA visited network server (AAAv) 120 can be used as a suitable AAA infrastructure component for MAP assignment, taking the visited operator's policy into account in the selection of MAP. The MAP selection could be for example based the current load of the available MAPs, the location of the mobile node and/or possibly preferences given by the mobile node.

A main component of the AAA infrastructure is the AAAh server 110, which preferably forwards any request for MAP assignment from a mobile node to the AAAv server 120, and furthermore generates a security key or similar credentials for immediate or future security association between a given mobile node 130 and an assigned MAP 125. The security key is then typically transferred from the AAAh 110 to the MAP 125 via the AAAv 120, and the MAP 125 preferably responds with information for finalizing the security association to the AAAh 110 via the AAAv 120. Finally, the AAAh server 110 sends the generated and collected HMIPv6 authorization information to the mobile node 130 over the AAA infrastructure. It is assumed that secure tunnels of the AAA infrastructure or other security measures such as encryption and source integrity protection are employed for transfer of sensitive information such as the security key(s).

The reliance on the AAA infrastructure offers different possibilities for bootstrapping the HMIPv6 service. For example, it is possible to provide a new authentication protocol, or to provide an extension to an authentication protocol carried over the AAA infrastructure and/or to enhance an AAA framework protocol application to carry the HMIPv6-related information, as schematically indicated in Fig. 2.

Preferably, an extended authentication protocol such as an extended EAP (Extensible Authentication Protocol) protocol adapted for HMIPv6 is utilized, with the addition of an enhanced AAA framework protocol application such as a HMIPv6 Diameter or Radius Application for the interface between AAAh server and the visited network MAP via the AAAv server.

For example, a new or extended authentication protocol may be carried by PANA (Protocol for carrying Authentication for Network Access), PPP (Point-to-Point Protocol), IEEE 802.1X or even over GPRS/UMTS interfaces between the mobile node and the AAA client in the visited network, and by Diameter or similar AAA framework or carrier protocol within the AAA infrastructure.

Alternatively, an enhanced AAA framework protocol application such as a new or extended Diameter or Radius Application is used without the support of any EAP extensions. For the path between the mobile and the AAA client, the Diameter or Radius Application could for example be carried by ICMP (Internet Control Message Protocol).

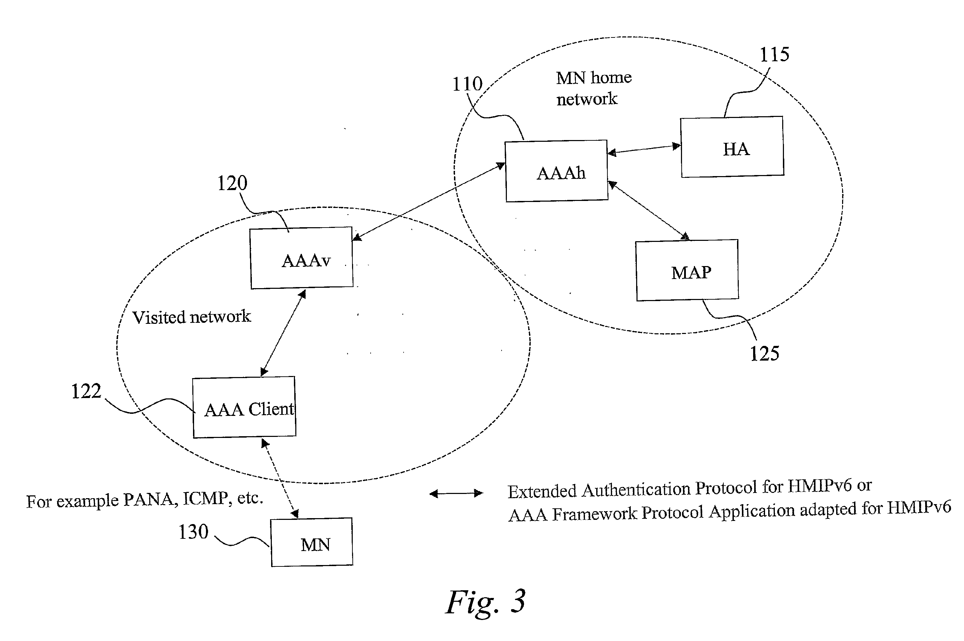

It has also been recognized that there are cases where it would be beneficial to have the MAP located in the home network or other networks, such as for the case where the visited network does not provide MAP support. An exemplary architecture for HMIPv6 support with MAP located in the home network is illustrated in Fig. 3.

It is here beneficial to use the AAA home network server (AAAh) 110 for MAP assignment. Preferably, the AAA home network server (AAAh) 110 also generates a security key or similar security parameters or credentials for security association between the mobile node and the assigned MAP 125 and sends said security key to the MAP 125. The MAP 125 responds with information for finalizing the security association to the AAAh 110, and the AAAh 110 subsequently sends HMIPv6 authorization information to the mobile node 130 over the AAA infrastructure.

Since the MAP 125 is located in the home network, the AAAv 120 does not have to see the transaction, and it is thus possible to have an "end-to-end procedure" for HMIPv6 authentication and authorization. This is preferably accomplished by using an extended authentication protocol such as an extended EAP (Extensible Authentication Protocol) protocol adapted for HMIPv6. Alternatively, an enhanced AAA framework protocol application such as a HMIPv6 Diameter or Radius Application can be utilized. A MAP 125 located in the home network can also be used to address the HA scalability issues, off-loading the HA 115 by reducing the number of binding updates that go to the HA 115 during intra-MAP domain mobility. By selecting the MAP to be topographically close to the location of the MN, fast handovers can be realized.

As should be understood, the invention has removed the limitation of the prior art that the MAP 125 has to be located in the visited network. Now, the location of the MAP can be in the home network, visited network, or other networks. Technically, it would be possible for the MN to bind with any MAP as long as an RCoA on the MAP can be obtained with AAA support, if operators allow this.

Re-assignment of MAP may occur during the following exemplary cases:
- Expiration of security keys between MN and MAP - for this case, the MN initiates HMIPv6 re-authentication/authorization, and the network may assign a different MAP that is more appropriate based on, e.g., current topological location of MN.
- At the request of mobile node (MN initiated) - for this case, the MN initiates HMIPv6 re-authentication/authorization requesting re-assignment of MAP
- At the request of the network (network initiated) - for the case, either the AAAh or AAAv initiates the re-assignment of MAP and "pushes" this to the MN when the need arises, e.g., when the MN moves to an AR that is better covered by a new MAP.

With reference to Figs. 2 and 3 again, a number of possible examples of different protocol combinations between the segments **AAA Client - AAAh,** and **AAAh - (AAAv) - MAP** are summarized below:

| **AAA Client <-> AAAh** | **AAAh <-> (AAAv) <-> MAP** |
|---|---|
| | |
| (i) AAA HMIPv6 Application | AAA HMIPv6 Application |
| | |
| (ii) Extended Authentication Protocol | AAA HMIPv6 Application |
| | |
| (iii) Extended Authentication Protocol | Extended Authentication Protocol |

The combination (iii) is especially applicable for the case where the MAP is located in the home network. When the MAP is located in the visited network, the AAAv may be involved in the selection of MAP based on visited network policy.

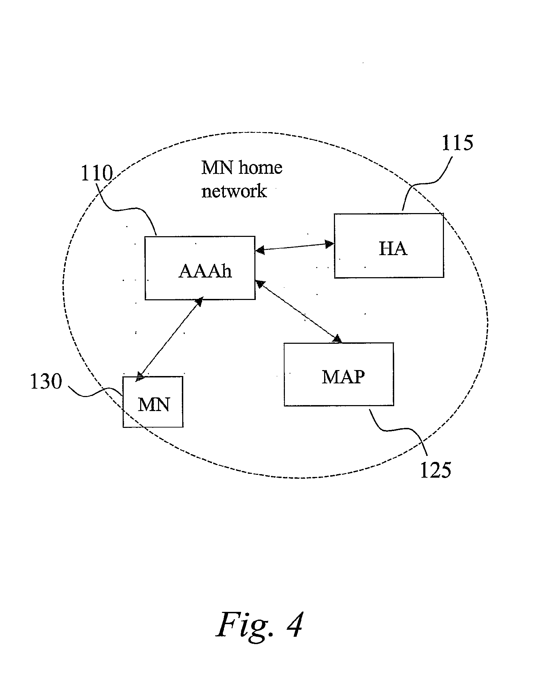

In another scenario, illustrated schematically in Fig. 4, the mobile node 130 is actually located in the home network and an AAA infrastructure component of the home network such as the AAAh server 110 provides the necessary support for the HMIPv6 service with a MAP 125 in the home network. This means that only the relevant portions of the extended authentication HMIPv6 protocol and AAA HMIPv6 application have to be used for exchange of the necessary authentication and authorization information.

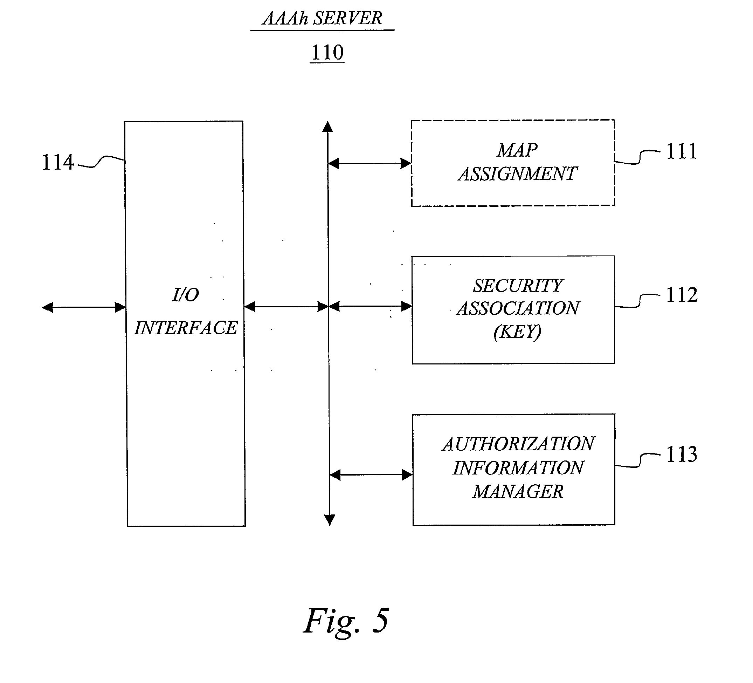

Fig. 5 is a schematic block diagram of an AAA home network server according to a preferred exemplary embodiment of the invention. In this example, the AAAh server 110 basically comprises an optional MAP assignment module 111, a security association module 112, an authorization information manager 113 and an input-output (I/O) interface 114. For the MAP in the home network case, the AAAh server 110 includes the MAP assignment module 111, which is operable for assigning and/or re-assigning a suitable MAP to the mobile node. For the MAP in the visited network case, the AAAh server 110 typically receives the necessary MAP assignment information on its I/O-interface 114. The AAAh server typically also receives a key seed and a binding update (BU) from the mobile node. Alternatively, the AAAh server generates the key seed itself and sends it to the mobile node. The security association module 112 preferably generates the required security key in response to the seed, and securely transfers this key to the MAP (directly to a MAP in the home network or via the AAAv server to a MAP in the visited network). The binding update (BU) is also forwarded to the MAP. The AAAh server 110 receives an RCoA address from the MAP and stores this data along with other relevant authorization (and/or configuration) information in the authorization information manager 113. The AAAh server may also receive information, such as IPSec information, from the MAP for finalizing the security association. Finally, the collected authorization (and/or configuration) information is transferred to the mobile node.

The AAAh server may also be responsible for home address assignment (unless the home address is configured by the MN itself) and/or home agent assignment.

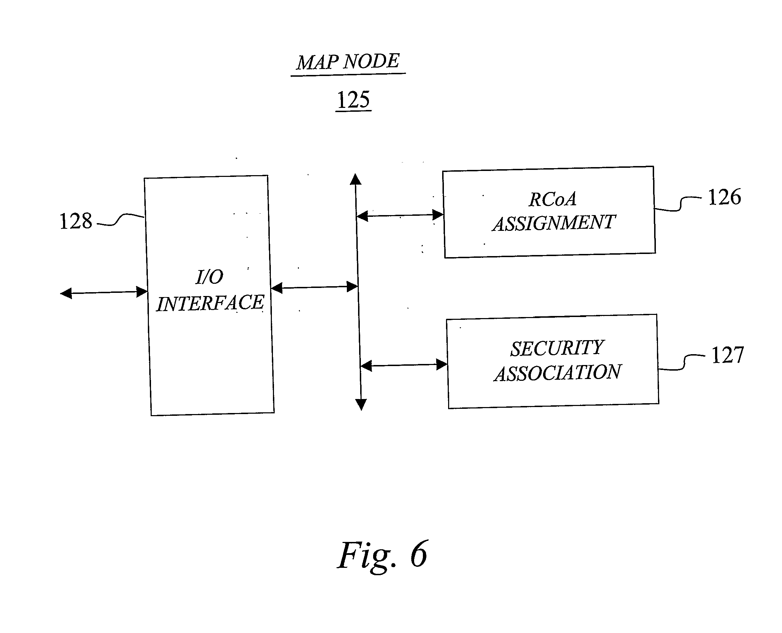

Fig. 6 is a schematic block diagram of a MAP node according to a preferred exemplary embodiment of the invention. In this example, the MAP 125 basically comprises an RCoA assignment module 126, a security association module 127 and an input-output (I/O) interface 128. The MAP preferably interacts with the AAA home network server for supporting the establishment of a security association with the mobile node. The MAP receives a security key from the AAA home network server over the I/O interface 128 for secure storage in the security association module 127. The MAP also prepares and sends information necessary for finalizing the security association with the mobile back to the AAA home network server, which in turn forwards the information to the mobile node over the AAA infrastructure. For binding in the MAP, the RCoA module 126 preferably assigns an RCoA address to the mobile node, stores this address together with the LCoA address of the mobile node in the binding cache (not shown) of the MAP, and also sends the assigned RCoA address to the AAA home network server for subsequent forwarding to the mobile node.
For a better understanding of the invention, somewhat more detailed examples of an extended authentication protocol for HMIPv6 and an AAA framework protocol application adapted for HMIPv6 will now be described.

### Extended authentication protocol for HMIPv6

In a preferred exemplary embodiment, an extended authentication protocol for HMIPv6, here exemplified by a new or extended EAP authentication protocol (referred to as "HMIPv6 authentication method" or "EAP/HMIPv6"), is defined that carries HMIPv6 related information facilitating for example discovery of MAP, dynamic allocation of MAP, dynamic allocation of RCoA, distribution of security key(s) between MN and MAP, and/or possible piggyback of HMIPv6 mobility procedures.

If desired, both HMIPv6 and MIPv6 authentication and/or authorization can be integrated in the same protocol, e.g. defining EAP/HMIPv6 as a superset of a EAP/MIPv6 protocol, which in addition to MIPv6-specific Type-Length-Values (TLVs) also defines new HMIP-specific TLV attributes. By including EAP/MIPv6 TLV attributes as part of EAP/HMIPv6, it will be possible to accommodate simultaneous executions of both MIPv6 and HMIPv6 authentication and/or authorization in a single traversal which enables shorter setup times. It would also be possible to execute only HMIPv6 authentication and/or authorization without the MIPv6 counterpart and vice versa, depending on the particular need of the MN at a specific instance. This allows a single EAP authentication protocol, EAP/HMIPv6, to be flexibly used on various use case scenarios.

In particular, relying on EAP extensions provides a streamlined solution, which is manageable and elegant with a minimum of backward compatibility problems. The use of EAP allows the AAA Client (and AAAv) to be agnostic to HMIPv6 procedures (i.e., this removes the dependency on HMIPv6 support of the visited network), and act as mere pass-through agent(s), at least when the MAP is located in the home network. This is one of the major advantages of using EAP.

As previously indicated, EAP/HMIPv6 may for example be carried by PANA, PPP, ICMP, IEEE 802.1X or even over GPRS/UMTS interfaces between the mobile node and the AAA client in the visited network. Although, PANA may be preferred in some cases, other carrier protocols which satisfy EAP requirements on lower layer ordering guarantees such as PPP [6] and IEEE 802.1X [7] may be used to carry EAP/MIPv6 between the MN and AAA Client. Specifically for the 3GPP2 CDMA2000 case, it is possible to carry EAP/HMIPv6 between the MN and AAA Client using PPP Data Link Layer protocol encapsulation with protocol field value set to C227 (Hex) for EAP [6].

A preferred embodiment uses Diameter, Radius or similar AAA framework or carrier protocol for communication between the AAA client and the AAAh server. For example, beyond the AAA client towards and within the AAA infrastructure, Diameter EAP Application [5] may be used to encapsulate EAP/HMIPv6 within Diameter, i.e. between the PAA/AAA Client and AAAh. The Diameter protocol may also be used by AAAh for optional assignment of MIP packet filters via MIP filter rules to the PAA/EP and HA, which correspond to the filter enforcement points. The Diameter protocol may also be used by AAAh for distribution of security keys to PAA for PANA security, and optional signaling of QoS parameters.

It should be noted that even though Diameter is the preferred choice, it may sometimes be appropriate to instead use another AAA protocol, such as Radius, with modifications obvious to the man skilled in the art.

Furthermore, piggyback of HMIPv6 mobility procedures in EAP/HMIPv6 allow possible shortening of overall setup times by optimizing authentication, authorization, and mobility in a common procedure.

### Exemplary EAP/HMIPv6 protocol details

In the following, exemplary EAP/HMIPv6 protocol details are provided to show examples of the overall flow and viability of concept.

### EAP TLV attributes

In a first realization example, a set of new EAP TLV attributes is defined under EAP/HMIPv6. By means of these attributes, the EAP protocol can, in addition to the main IPv6 authentication information, carry HMIPv6-related information and optionally also MIPv6-related information:
Different authentication protocols are possible for EAP/HMIPv6. In a preferred embodiment, the invention proposes implementation through MD5-challenge authentication, but other protocols also lie within the scope of the invention.

An exemplary summary matrix of EAP/HMIPv6 TLV's is given below in Table I:

| **EAP/HMIPv6 Type-Length-Values** | **Source** | **Destination** | **Purpose** | **Comment** |
|---|---|---|---|---|
| HMIPv6 specific TLV's: | | | | |
| · RCoA Request EAP-TLV attribute | MN | AAAh | request RCoA | |
| · RCoA Response EAP-TLV attribute | AAAh | MN | assign RCoA | MAP in home |
| | AAAh | MN | forward RCoA from AAAv | MAP in visited |
| · RCoA EAP-TLV attribute | AAAh | MAP | assign RCoA | MAP in home |
| · MAP Address Request EAP-TLV attribute | MN | AAAh | request MAP address | |
| · MAP Address Response EAP-TLV attribute | AAAh | MN | assign MAP address | MAP in home |
| | AAAh | MN | forward MAP address from AAAv | MAP in visited |
| · MAP-MN Pre-shared Key Generation Nonce EAP-TLV attribute | MN | AAAh | seed for MN-MAP key | |
| · MAP-MN Pre-shared Key EAP-TLV attribute | AAAh | MAP | assign MN-MAP key | MAP in home |
| · MAP IKE KeyID EAP-TLV attribute | AAAh | MN | assign IKE KeyID | MAP in home |
| · MAP-MN IPSec SPI EAP-TLV attribute | MAP | MN via AAAh | assign SPI | MAP in home |
| | AAAh | MN | forward from MAP | MAP in visited |
| · MAP-MN IPSec Protocol EAP-TLV attribute | MAP | MN via AAAh | assign IPSec Protocol | MAP in home |
| | AAAh | MN | forward from MAP | MAP in visited |
| · MAP-MN IPSec Crypto EAP-TLV attribute | MAP | MN via AAAh | assign IPSec Crypto | MAP in home |
| | AAAh | MN | forward from MAP | MAP in visited |
| · MAP-MN IPSec Key Lifetime EAP-TLV attribute | MAP | MN via AAAh | assign IPSec Key Lifetime | MAP in home |
| | AAAh | MN | forward from MAP | MAP in visited |
| · HMIP-Binding-Update EAP-TLV attribute | MN | MAP via AAAh | piggyback HMIP binding update | MAP in home |
| | MN | AAAh | piggyback HMIP binding update | MAP in visited |
| · HMIP-Binding-Acknowledgement EAP-TLV attribute | MAP | MN via AAAh | piggyback HMIP binding ack. | MAP in home |
| | AAAh | MN | forward from MAP | MAP in visited |
| MIPv6 specific TLV's (optional): | | | | |
| · MIPv6 Home Address EAP-TLV attribute | AAAh | HA | assign MN Home Address | |
| · HA-MN Pre-shared Key EAP-TLV attribute | AAAh | HA | assign HA-MN key | |
| · HA-MN IPSec Protocol EAP-TLV attribute | HA | MN via AAAh | assign IPSec Protocol | |
| · HA-MN IPSec Crypto EAP-TLV attribute | HA | MN via AAAh | assign IPSec Crypto | |
| · MIP-Binding-Update EAP-TLV attribute | MN | HA via AAAh | piggyback MIP binding update | |
| · MIP-Binding-Acknowledgement EAP-TLV attribute | HA | MN via AAAh | piggyback MIP binding ack. | |
| Basic MIPv6 TLV's (optional): | | | | |
| · MD5 Challenge EAP-TLV attribute | AAAh | MN | issue challenge | |
| · MD5 Response EAP-TLV attribute | MN | AAAh | provide response to challenge | |
| · MIPv6 Home Address Request EAP-TLV attribute | MN | AAAh | request MN home address | |
| · MIPv6 Home Address Response EAP-TLV attribute | AAAh | MN | assign MN home address | |
| · MIPv6 Home Agent Address Request EAP-TLV attribute | MN | AAAh | request HA address | |
| · MIPv6 Home Agent Address Response EAP-TLV attribute | AAAh | MN | assign HA address | |
| · HA-MN Pre-shared Key Generation Nonce EAP-TLV attribute | MN | AAAh | seed for HA-MN key | |
| · IKE KeyID EAP-TLV attribute | AAAh | MN | info for obtaining HA-MN pre-sharedkey from AAAh | |
| · HA-MN IPSec SPI EAP-TLV attribute | HA | MN via AAAh | assign SPI | |
| · HA-MN IPSec Key Lifetime EAP-TLV attribute | HA | MN via AAAh | assign IP Sec Key lifetime | |
| · PAC-PAA Pre-shared Key Generation Nonce EAP-TLV attribute | MN | AAAh | seed for PAC-PAA key | |

| | | | | |
|---|---|---|---|---|
| *Note: the IKE KeyID includes some octets which informs the HA*/*MAP how to retrieve (or generated) the HA-MN pre-shared key*/*MAP-MN pre-shared key from AAAh.* | | | | |

One or more of the following exemplary EAP-TLV attributes may be defined for HMIPv6 purposes:
- *RCoA Request EAP-TLV attribute:*
   This represents a request for a dynamically allocated RCoA address for the authenticated MN. It will be requested by the MN to the AAAh when the MN requests to be authenticated and given HMIPv6 service.
- *RCoA (Response EAP-TLV attribute:*
   This represents a dynamic allocated RCoA address for the authenticated MN. It will be notified to the MN from AAAh when the MN, which has requested for one, has been successfully authenticated.
- *RCoA EAP-TLV attribute:*
   This represents a dynamic allocated RCoA address for the authenticated MN. It will be notified to the MAP from AAAh in order to assign the RCoA address in the MAP, when the MN, which has requested for one, has been successfully authenticated.
- *MAP Address Request EAP-TLV attribute:*
   This represents a request for an address of a dynamically allocated MAP for the MN when successfully authenticated. It will be requested by the MN to the AAAh when a MN requests to be authenticated and given HMIPv6 service. As the HMIPv6 protocol has a dynamic MAP discovery method to allocate the MAP, this attribute is optional.
- *MAP Address (Response EAP-TLV attribute:*
   This represents an address of a dynamic allocated MAP for the authenticated MN. It will be notified to the MN from the AAAh when a MN requests to be authenticated and given HMIPv6 service. As the HMIPv6 protocol has a dynamic MAP discovery method to allocate the MAP, this attribute is optional.
- *MAP-MN Pre-shared Key Generation Nonce EAP-TLV attribute:*
   This represents the octet string generated randomly by MN as a seed for generating the pre-shared key between MAP-MN. The MN can internally generate the MAP-MN pre-shared key by using an appropriate hash algorithm on the combination of this nonce and the shared key between MN and AAAh. This attribute is optional when a valid MAP-MN pre-shared key already exists.
- *MAP-MN Pre-shared Key EAP-TLV attribute:*
   This represents a dynamically generated pre-shared key between MAP-MN. It will be notified to the MAP from the AAAh when a MN requests to be authenticated and given HMIPv6 service. The AAAh can internally generate the MAP-MN pre-shared key by using an appropriate hash algorithm on the combination of the nonce given by the MAP-MN Pre-shared Key Generation Nonce EAP-TLV Attribute and the shared key between MN and AAAh. This attribute is optional when a valid MAP-MN pre-shared key already exists.
- *MAP IKE Key ID EAP*-*TLV attribute:*
   This represents the ID payload defined in [8]. The KeyID is generated by the AAAh and sent to the MN upon successful authentication. The KeyID includes some octets which informs the MAP how to retrieve (or generate) the MAP-MN pre-shared key from AAAh. This attribute is optional, and would generally not be needed when the MN did not submit a MAP-MN pre-shared key generation nonce, i.e., a valid MAP-MN pre-shared key already exists, e.g., during MIPv6 handoffs. It is also not needed for the case when the MAP-MN pre-shared key is conveyed by the AAAh to the MAP.
- *MAP-MN IPSec SPI EAP-TLV attribute:*
   This represents the Security Parameter Index for IPSec between MAP-MN. This is preferably generated by the MAP and informed to the MN for the case when the MAP-MN pre-shared key is conveyed by the AAAh to the MAP. This attribute is optional and is generally not needed when the MN did not submit a MAP-MN pre-shared key generation nonce, i.e. a valid MAP-MN pre-shared key already exists, e.g., during MIPv6 handoffs.
- *MAP-MN IPSec Protocol EAP-TLV attribute:*
   This represents the IPSec Protocol (e.g. ESP or AH) between MAP-MN. This is informed to the MN for the case when the MAP-MN pre-shared key is conveyed by the AAAh to the MAP. This attribute is optional and is generally not needed when the MN did not submit a MAP-MN pre-shared key generation nonce, i.e. a valid MAP-MN pre-shared key already exists, e.g., during MIPv6 handoffs.
- *MAP-MN IPSec Crypto EAP-TLV attribute:*
   This represents the Cryptographic Algorithm for IPSec between MAP-MN. This is informed to the MN for the case when the MAP-MN pre-shared key is conveyed by the AAAh to the MAP. This attribute is optional and is generally not needed when the MN did not submit a MAP-MN pre-shared key generation nonce, i.e. a valid MAP-MN pre-shared key already exists, e.g., during MIPv6 handoffs.
- *MAP-MN IPSec Key Lifetime EAP-TLV attribute:*
   This represents the Key Lifetime for IPSec between MAP-MN. This is informed to the MN for the case when the MAP-MN pre-shared key is conveyed by the AAAh to the MAP. This attribute is optional and is generally not needed when the MN did not submit a MAP-MN pre-shared key generation nonce, i.e. a valid MAP-MN pre-shared key already exists, e.g., during MIPv6 handoffs.
- *HMIP-Binding-Update EAP*-*TLV attribute:*
   This represents the MAP Binding Update packet generated by the MN. This is forwarded to the MAP via AAAh from the MN in the authentication and authorization exchanges. This attribute is optional and is generally not needed when the MN sends MAP Binding Update packet directly to MAP.
- *HMIP*-*Binding*-*Acknowledgement EAP-TLV attribute:*
   This represents the MAP Binding Acknowledgement packet generated by the MAP. This is forwarded to the MN via AAAh from the MAP in the authentication and authorization exchanges. This attribute is optional and is generally not needed when the MAP sends MAP Binding Update packet directly to MN.

The following optional EAP-TLV attributes may be defined for special MIPv6 purposes:
- *MIPv6 Home Address EAP-TLV attribute:*
   This represents a dynamic allocated MIPv6 home address for the authenticated MN. It will be notified to the HA from AAAh in order to assign the MIPv6 home address in the HA, when the MN, which has requested for one, has been successfully authenticated.
- *HA-MN Pre-shared Key EAP-TLV attribute:*
   This represents a dynamically generated pre-shared key between HA-MN. It will be notified to the HA from the AAAh when a MN requests to be authenticated and given MIPv6 service. The AAAh can internally generate the HA-MN pre-shared key by using an appropriate hash algorithm on the combination of the nonce given by the HA-MN Pre-shared Key Generation Nonce EAP-TLV Attribute and the shared key between MN and AAAh. This attribute is optional when a valid HA-MN pre-shared key already exists.
- *HA-MN IPSec Protocol EAP-TLV attribute:*
   This represents the IPSec Protocol (e.g. ESP or AH) between HA-MN. This is informed to the MN for the case when the HA-MN pre-shared key is conveyed by the AAAh to the HA. This attribute is optional and is generally not needed when the MN did not submit a HA-MN pre-shared key generation nonce, i.e., a valid HA-MN pre-shared key already exists, e.g., during MIPv6 handoffs.
- *HA-MN IPSec Crypto EAP-TLV attribute:*
   This represents the Cryptographic Algorithm for IPSec between HA-MN. This is informed to the MN for the case when the HA-MN pre-shared key is conveyed by the AAAh to the HA. This attribute is optional and is generally not needed when the MN did not submit a HA-MN pre-shared key generation nonce, i.e., a valid HA-MN pre-shared key already exists, e.g., during MIPv6 handoffs.
- *MIP-Binding-Update EAP-TLV attribute:*
   This represents the Binding Update packet generated by the MN. This is forwarded to the HA via AAAh from the MN in the authentication and authorization exchanges. This attribute is optional and is generally not needed when the MN sends Binding Update packet directly to HA.
- *MIP-Binding-Acknowledgement EAP-TLV attribute:*
   This represents the Binding Acknowledgement packet generated by the HA. This is forwarded to the MN via AAAh from the HA in the authentication and authorization exchanges. This attribute is optional and is generally not needed when the HA sends the Binding Acknowledgement packet directly to MN.

The following EAP-TLV attributes may be defined for HMIPv6/MIPv6 authentication:
- *MD5 Challenge EAP*-*TLV attribute:*
   This represents the octet string generated randomly by the AAAh and sent to MN for MD5 challenge.
- *MD5 Response EAP-TLV attribute:*
   This represents the octet string generated as a result of MD5 hash function with the shared secret key between AAAh and MN.

The following optional EAP-TLV attributes may be defined for dynamic MN home address allocation:
- *MIPv6 Home Address Request EAP*-*TLV attribute:*
   This represents a request for a dynamically allocated MIPv6 home address for the authenticated MN. It will be requested by the MN to the AAAh when the MN initially requests to be authenticated and given MIPv6 service. This attribute is optional when the MN already has a previously assigned home address, e.g., during MIPv6 handoffs.
- *MIPv6 Home Address Response EAP-TLV attribute:*
   This represents a dynamic allocated MIPv6 home address for the authenticated MN. It will be notified to the MN from AAAh when the MN, which has requested for one, has been successfully authenticated. This attribute is optional when the MN already has a previously assigned home address, e.g., during MIPv6 handoffs.

The following optional EAP-TLV attributes may be defined for dynamic HA allocation:
- *MIPv6 Home Agent Address Request EAP*-*TLV attribute:*
   This represents a request for an address of a dynamically allocated HA for the MN when successfully authenticated. It will be requested by the MN to the AAAh when a MN initially requests to be authenticated and given MIPv6 service. As the MIPv6 protocol has a dynamic HA discovery method to allocate the HA, this attribute is optional. This is also the case when the MN already has a previously assigned HA, e.g., during MIPv6 handoffs.
- *MIPv6 Home Agent Address Response EAP-TLV attribute:*
   This represents an address of a dynamic allocated HA for the authenticated MN. It will be notified to the MN from the AAAh when a MN initially requests to be authenticated and given MIPv6 service. As the MIPv6 protocol has a dynamic home agent discovery method to allocate the home agent, this attribute is optional. This is also the case when the MN already has a previously assigned HA, e.g., during MIPv6 handoffs.

The following optional EAP-TLV attributes may be defined for distribution of security keys between HA and MN:
- *HA-MN Pre-shared Key Generation Nonce EAP-TLV attribute:*
   This represents the octet string generated randomly by MN as a seed for generating the pre-shared key between HA-MN. The MN can internally generate the HA-MN pre-shared key by using an appropriate hash algorithm on the combination of this nonce and the shared key between MN and AAAh. This attribute is optional when a valid HA-MN pre-shared key already exists, e.g., during MIPv6 handoffs.
- *IKE KeyID EAP-TLV attribute:*
   This represents the ID payload defined in [8]. The KeyID is generated by the AAAh and sent to the MN upon successful authentication. The KeyID includes some octets which informs the HA how to retrieve (or generate) the HA-MN pre-shared key from AAAh. This attribute is optional, and would generally not be needed when the MN did not submit a HA-MN pre-shared key generation nonce, i.e., a valid HA-MN pre-shared key already exists, e.g., during MIPv6 handoffs. It is also not needed for the case when the HA-MN pre-shared key is conveyed by the AAAh to the HA via the AAAh-HA interface defined in [9].
- *HA-MN IPSec SPI EAP-TLV attribute:*
   This represents the Security Parameter Index for IPSec between the HA and MN. This is generated by the HA and informed to the MN for the case when the HA-MN pre-shared key is conveyed by the AAAh to the HA via the AAAh-HA interface defined in [9]. This attribute is optional and is generally not needed when the MN did not submit a HA-MN pre-shared key generation nonce, i.e., a valid HA-MN pre-shared key already exists, e.g., during MIPv6 handoffs. It is also not needed for the case when the AAAh-HA interface defined in [9] is not used.
- *HA-MN IPSec Key Lifetime EAP-TLV attribute:*
   This represents the Key Lifetime for IPSec between the HA and MN. This is generated by the HA and informed to the MN for the case when the HA-MN pre-shared key is conveyed by the AAAh to the HA via the AAAh-HA interface defined in [9]. This attribute is optional and is generally not needed when the MN did not submit a HA-MN pre-shared key generation nonce, i.e., a valid HA-MN pre-shared key already exists, e.g. during MIPv6 handoffs. It is also not needed for the case when the AAAh-HA interface defined in [9] is not used.

Finally, the following optional EAP-TLV attribute may be defined for distribution of security keys between PAC and PAA for PANA security:
- *PAC-PAA Pre-shared Key Generation Nonce EAP-TLV attribute:*
   This represents the octet string generated randomly by MN/PAC as a seed for generating the pre-shared key between PAC-PAA. The MN/PAC can internally generate the PAC-PAA pre-shared key by using an appropriate hash algorithm on the combination of this nonce and the shared key between MN and AAAh. This attribute is needed for PANA security.

Alternatively, the AAAh server may be configured for generating not only the MN-MAP security key but also the information required for finalizing the security association.

As can be seen from the above examples, the HMIPv6-related configuration is normally regarded as part of the overall authorization procedure.

### EAP Generic Container Attribute (EAP GCA)

In an alternative EAP realization, EAP is used as a carrier of HMIPv6-related information (optionally also MIPv6 information) without creating a new so-called EAP method, but rather by carrying the information in a generic container EAP attribute that can be used together with any EAP method.

In this exemplary realization, which builds on AAA support in the access network, EAP is augmented with a generic container attribute that can be used to carry any (assumedly non-EAP related) data, e.g. HMIPv6-specific data and optionally also MIPv6-specific data (if MIPv6 bootstrapping is also desired). This allows the MN and the AAAh to communicate in a manner that is transparent to the visited domain, including the access network, the AAA client and the AAAv, at least for the MAP in the home network case. EAP is preferably carried in a AAA protocol, e.g. the Diameter EAP Application or even RADIUS [10], [11], between the AAA client and the AAAh.

This new attribute should preferably be available for all EAP methods and can be included in any EAP message, including EAP Success/Failure messages. In this solution the new generic container attribute is used to convey HMIPv6-specific data (optionally also MIPv6 data) between the MN and the AAAh. The solution may also include a Diameter or RADIUS application that is used to exchange AAA and relevant data between the AAAh and the HA.

In the following, a possible implementation of a generic container attribute (GCA) is discussed in terms of the current EAP protocol [12]. As stated, the generic container attribute should preferably be available to all methods and should be possible to include in any EAP message, including EAP Success/Failure messages. This implies that it should be a part of the EAP layer rather than the EAP method layer [12]. An important issue to consider is backward compatibility¹. The use of the GCA in the given examples normally assumes that the new attribute is introduced in EAP in a manner that is backward compatible and transparent to the EAP authenticator. Introducing a GCA with these properties may require some special considerations, as will be discussed below.
¹ This refers to backward compatibility in terms of the MN and the EAP authenticator (typically located in the NAS). The MN and the EAP authentication server (i.e. the AAAh) are assumed to always be compatible.

For example, the format of the GCA could be a two-byte GCA length indicator followed by a GCA recipient indicator and a GCA payload. The GCA recipient indicator would indicate to what internal entity the EAP module should send the payload of the received GCA (i.e. this indicator would correspond to the protocol/next header field in the IP header or the port number in the UDP and TCP headers). The GCA payload would then be a generic chunk of data that is not interpreted by the EAP layer. The absence of a GCA would preferably be indicated by a GCA length indicator set to zero.

To provide backward compatibility the GCA should preferably be included in the EAP packets in a way that is transparent to pass-through EAP authenticators. A pass-through EAP authenticator is an EAP authenticator (residing in an NAS; typically a WLAN AP or an access router) that relays (almost all) EAP packets between the MN and a back-end EAP authentication server (a AAA server). It is stated in [12] that the pass-through behavior of an EAP authenticator is to relay EAP packets based on the EAP layer header, i.e. the Code, Identifier and Length fields in the beginning of the EAP packets. This implies that the desired transparency (and hence backward compatibility) could possibly be achieved if the GCA is placed after the EAP layer header (i.e. after the Code, Identifier and Length fields).

However, an EAP authenticator normally also has to check the Type field (following the EAP layer header) of EAP Response packets in order to identify EAP Identity Response packets, from which the NAI that is needed for the AAAh routing is extracted. When the EAP authenticator identifies an EAP Identity Response packet, it extracts the NAI from the Type-Data field following the Type field. Hence, placing the GCA immediately after the EAP layer header (in a manner that is transparent to the EAP authenticator) is only possible in EAP Request packets. Therefore, it would normally be preferable to arrange the GCA after the Type field or even after the (possibly NULL-terminated) Type-Data field.

Placing the GCA immediately after the Type field would enable the use of the GCA in all EAP Response packets but EAP Identity Response packets. The use of the GCA in EAP Identity Response packets would be prohibited, because from these packets the EAP authenticator needs to extract the NAI from the Type-Data field, which a legacy EAP authenticator would expect to find immediately after the Type field. This may be a restriction for the GCA usage considering that EAP normally has rather few round trips. Possibly, the GCA could be placed after a NULL-terminated Type-Data field in the EAP Identity Response packet, while keeping its position after the Type field in other EAP packets.

It would often be desirable with a GCA position that can be used consistently in all EAP packets. From the above discussion it seems that a position in which the GCA could be placed in all EAP packets in a backward-compatible manner is at the end of the packet, more or less as a trailer. However, this GCA location may cause problems for those EAP packets that do not have explicit length indicators for the Type-Data parameter(s), but relies on the Length field in the EAP layer header. In these packets it would not be able to distinguish the GCA from the Type-Data field.

To solve this problem the order of the GCA length indicator, the GCA recipient indicator and the GCA payload should be reversed such that the GCA length indicator appears last. Thus, when placing the GCA at the end of an EAP packet, the last two octets of the EAP packet (whose length is indicated by the Length field in the EAP layer header) would always be the GCA length indicator. Unless the GCA length indicator is zero, the GCA recipient indicator would appear before the GCA length indicator and the GCA payload (whose size is determined from the GCA length indicator) would be located before the GCA recipient indicator. Through this principle it would always be possible to identify the GCA in an EAP packet and to distinguish the GCA from the Type-Data field. Still the use of the GCA would be transparent for a pass-through EAP authenticator.

Backward compatibility with this GCA solution further requires that the EAP authenticator does not try to extract information from the EAP Request/Response packets (except the EAP layer header and the NAI) and that it accepts that the Length field in the Success/Failure packets indicates a value is greater than 4.

An alternative way to cope with the backward compatibility problem is to use EAP GCA Test Request/Response packets (i.e. new EAP packets with newly defined values of the Type field) to determine whether the MN supports the GCA.

Before or after the initial EAP Identity Request/Response packet exchange an EAP authenticator supporting the GCA would send an EAP GCA Test Request packet (i.e. an EAP Request packet with a dedicated Type value) to the MN (the EAP peer state machine in [13] indicates that both alternative sending times would be feasible). If the MN supports the GCA, it responds with an EAP GCA Test Response packet. Otherwise the MN interprets the EAP GCA Test Request packet as a request to use an unknown EAP method and therefore the MN responds with an EAP Nak packet. From the response from the MN the EAP authenticator can determine whether the MN supports the GCA.

An MN supporting GCA can determine whether the EAP authenticator supports the GCA from the presence or absence of the EAP GCA Test Request packet. If an EAP GCA Test Request packet is received when expected (i.e. before or after the EAP Identity Request/Response exchange), the EAP authenticator supports the GCA. Otherwise it does not.

If both the MN and the EAP authenticator support the GCA, it is placed after the EAP layer header in all subsequent EAP packets (with the original order of the GCA components). Otherwise, the GCA *may* still be included in the EAP packets that allow it to be included in a backward-compatible manner (as described above).

There are some limitations to the described alternative way of dealing with the backward compatibility problem. Firstly, one MN-EAP authenticator roundtrip is wasted. Moreover, if the EAP GCA Test Request/Response packets are exchanged after the initial EAP Identity Request/Response packet exchange, the GCA cannot be used in the EAP Identity Response packet. This embodiment may also require that the EAP authenticator (probably the NAS) uses a modified version of EAP, such as EAPv2. Accordingly, although other alternatives are possible, the preferred way of arranging the GCA in EAP packets would typically be as a trailer at the end of the packet with the GCA length indicator last, after the GCA payload and the GCA recipient indicator.

If the number of EAP round trips is not enough for the data that is exchanged in the GCAs, the AAAh may consider increasing the number of EAP round trips through EAP Notification Request/Response exchanges for the purpose of conveying the GCA.

Another variant is actually to introduce the GCA in an EAP method on the method layer of the EAP protocol stack. If the GCA is made EAP method specific, the GCA does not introduce any backward compatibility problem, since it will then normally be a part of the Type-Data field.

### Exemplary signaling flows for EAP/HMIPv6

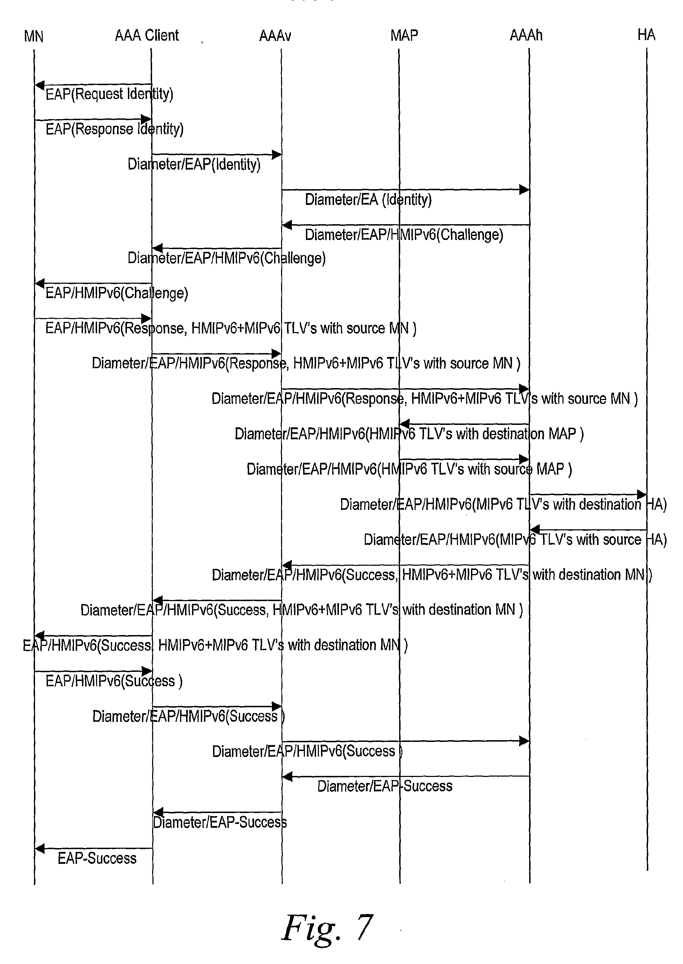

Fig. 7 illustrates an exemplary EAP/HMIPv6 (Diameter) signaling flow for the case when MAP is located in the home network.

The AAA Client requests MN authentication using EAP (Request Identity), and the MN responds with EAP (Response Identity).

The MN response is sent to the AAAh via the AAA infrastructure. The AAAh determines from the identity of the MN and based on operator policy that EAP/HMIPv6 methodology is appropriate for authentication and authorization of the MN (i.e. the AAAh knows the capabilities of the MN). The AAAh sends an indication of the suggested EAP methodology (e.g. EAP/HMIPv6) along with a challenge to the MN via the AAA infrastructure. The indication of EAP methodology or scheme may be implemented by assigning a new EAP Type number for the extended EAP scheme (e.g. EAP/HMIPv6). In this way, the mobile node will know which EAP scheme that the AAAh is proposing. Alternatively, a specially formatted challenge is sent to the mobile node, which recognizes that the challenge indicates a given EAP scheme.

The MN desires to bootstrap HMIPv6, and replies to the AAAh suggestion and challenge with a challenge response as well as appropriate EAP attributes (TLVs) that convey a request to be assigned an appropriate MAP along with the necessary information for security association with the assigned MAP. In this process, the MN is also able to bootstrap MIPv6 if this has not yet been carried out previously. The MN response is sent to the AAAh via the AAA infrastructure. Although the MAP assignment request may in fact be implicit, it is normally recommendable to make use of an explicit MAP assignment request. For cases where the mobile node is already aware of the MAP address and may e.g. simply be renewing the security association with the MAP, there will be no MAP assignment request, but only re-authentication and/or reauthorization.

The AAAh validates the MN's challenge response and if successful this means that the MN is authentic, and the AAAh then proceeds to process the MN's other requests.

First, the AAAh selects a MAP in the home network, and sends the MAP an enhanced EAP (note that this is a separate EAP session than the one already ongoing between the MN and the AAAh) message comprising e.g. the security key(s), and the MAP responds to the AAAh, preferably by providing information, if required or otherwise appropriate, for finalizing the security association with the MN. For example, for IPSec security associations it may be necessary to make use of EAP attributes such as the IPSec Protocol, IPSec Crypto, IPSec Key Lifetime EAP TLV attributes defined in Table I above.

In this and the following illustrative examples, it is assumed that the mobile node (MN) and the AAAh have a common shared secret. This could for example be a symmetric key shared between the identity module installed in the mobile node and the home network operator. The identity module can be any tamper-resistant identity module known to the art, including standard SIM cards used in GSM (Global System for Mobile Communications) mobile telephones, Universal SIM (USIM), WAP (Wireless Application Protocol) SIM, also known as WIM, ISIM (IP Multimedia Subsystem Identity Module) and, more generally, UICC (Universal Integrated Circuit Card) modules. For the MN-MAP (MN-HA) security association, a seed or nonce can be conveyed by the MN to the AAAh (or the other way around, i.e. the seed is originated by the AAAh and conveyed to the MN) from which the AAAh can create the MN-MAP (MN-HA) security key(s) based on the shared secret. The mobile node is able to generate the same security key(s) by itself since it originated the seed/nonce (or receives the seed from the AAAh) and also has the shared secret. Alternatively, the AAAh may itself generate the security information and securely transfer it to the relevant nodes.

Secondly, if MIPv6 bootstrapping is requested, the AAAh proceeds to service this MIPv6 bootstrapping request by selecting a HA using another enhanced EAP session, and the HA responds to the AAAh by providing information necessary to create the security association with the MN. Optionally, it is possible to piggyback "MAP binding updates" as well as "HA binding updates" in the authentication and authorization exchanges. This means that the HMIPv6 binding is integrated in the same round trip as the MN-MAP security association (only the LCoA is required in the binding update from the mobile). For this case, the HMIPv6 RCoA obtained by the AAAh in the first operation with the MAP is automatically MIPv6 binding updated with the HA in the second operation.

After the AAAh has communicated with the MAP and HA as described above, the AAAh sends the authorization (and/or configuration) information such as MAP address, RCoA, HA address, MN home address, and security association information along with an authentication success indication back to the MN via extended EAP. The extra last round trip of exchanges in Fig. 7 is to ensure that the EAP protocol is concluded smoothly according to the current EAP protocol specification.

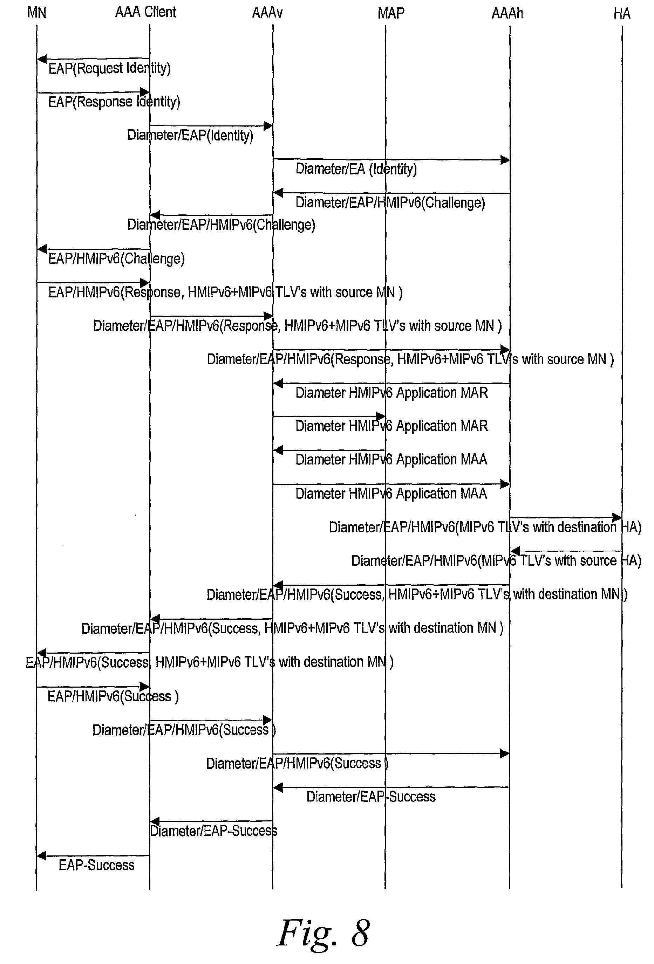

Fig. 8 illustrates an exemplary EAP/HMIPv6 (Diameter) signaling flow for the case when MAP is located in the visited network.

The AAA Client requests MN authentication using EAP (Request Identity), and the MN responds with EAP (Response Identity).

The MN response is sent to the AAAh via the AAA infrastructure. The AAAh determines from the identity of the MN and based on operator policy that EAP/HMIPv6 methodology is appropriate for authentication and authorization of the MN (i.e. the AAAh knows the capabilities of the MN). The AAAh sends and indication of the suggested EAP methodology (i.e. EAP/HMIPv6) along with a challenge to the MN via the AAA infrastructure.

The MN desires to bootstrap HMIPv6, and replies to the AAAh suggestion and challenge with a challenge response as well as appropriate EAP attributes (e.g. TLVs) that convey a request to be assigned an appropriate MAP along with the necessary details for security association with the assigned MAP. The MN is also in the process able to bootstrap MIPv6 if this has not yet been carried out previously. The MN response is sent to the AAAh via the AAA infrastructure.

The AAAh validates the MN's challenge response and if successful this means that the MN is authentic, and the AAAh proceeds to process the MN's other requests.

First, the AAAh forwards a request for MAP in the visited network to the appropriate AAAv, this is preferably done via a Diameter application which for simplicity has been called Diameter HMIPv6 Application. The reason for this is that the visited operator's policy has to be taken into account in the selection of MAP in the visited network, and the AAAv thus needs to be able to see the transaction (with EAP the exchanges are end-to-end and this is not possible). The AAAv selects a MAP in the visited network, and forwards the Diameter HMIPv6 Application message containing e.g. security key(s) to the MAP. The MAP responds to the AAAh via the AAAv, preferably by providing information, if required or otherwise appropriate, for finalizing the security association with the MN. Secondly, the AAAh proceeds to service the MIPv6 bootstrapping request, if such a request is present, by selecting a HA using another enhanced EAP session, and the HA responds to the AAAh by providing information necessary to create the security association with the MN. Note that it is possible to piggyback "MAP binding updates" as well as "HA binding updates" in the authentication and authorization exchanges. For this case, the HMIPv6 RCoA obtained by the AAAh in the first operation with the MAP is automatically MIPv6 binding updated with the HA in the second operation.

After the AAAh has communicated with the MAP and HA as described above, the AAAh sends the authorization (and/or configuration) information such as MAP address, RCoA, HA address, MN home address and security association information along with an authentication success indication back to the MN via extended EAP. The extra last round trip of exchanges in Fig. 8 is to ensure that the extended EAP protocol is concluded smoothly according to the current EAP protocol specification.

Although some of the detailed exemplary embodiments have primarily been discussed with reference to the current EAP version, it should be understood that the invention very well is applicable onto other EAP versions, such as EAPv2, as well as other authentication protocols extended or configured in the described manner. EAP is merely an example of a possible implementation, and the invention is generally not limited thereto and may alternatively involve non-EAP schemes.

### AAA Framework Protocol Application for HMIPv6

In another exemplary embodiment, a new AAA framework protocol application, here exemplified by a Diameter Application adapted for HMIPv6 (referred to as "Diameter HMIPv6 Application"), is created that carries HMIPv6-related information facilitating for example discovery of MAP, dynamic allocation of MAP, dynamic allocation of RCoA, distribution of security keys between MN and MAP, and/or possible piggyback of HMIPv6 mobility procedures. Although Diameter is referred to in the following, it should be understood that Radius or other similar AAA framework protocol can be used as a basis for a new or extended HMIPv6 application.

If desired, both HMIPv6 and MIPv6 authentication and/or authorization can be integrated in the same AAA framework protocol application. This can be accomplished by employing the Diameter MIPv6 Application described in [3], and in addition defining new HMIP-specific command codes, AVPs, and/or flags. By including the command codes, AVPs, and flags of the Diameter MIPv6 Application as part of the Diameter HMIPv6 Application, it will be possible to accommodate simultaneous executions of both MIPv6 and HMIPv6 authentication and/or authorization in a single traversal which enables shorter setup times. It would also be possible to execute only HMIPv6 authentication and/or authorization without the MIPv6 counterpart and vice versa, depending on the particular need of the MN at a specific instance. This allows a single application, the Diameter HMIPv6 Application, to be flexibly used on various use case scenarios.

Furthermore, piggyback of HMIPv6 mobility procedures in Diameter HMIPv6 Application allows possible shortening of overall setup times by optimizing authentication, authorization, and mobility in a common procedure.

### Diameter HMIPv6 Application Details

In the following, exemplary Diameter HMIPv6 Application details are provided to show examples of the overall flow and viability of concept. Preferably, new HMIP-specific command codes, AVPs, and/or flags are defined that would carry information that facilitate for example discovery of MAP, dynamic allocation of MAP, dynamic allocation of RCoA, distribution of security keys between MN and MAP, and/or possible piggyback of HMIPv6 mobility procedures. The command codes, AVPs, and flags of the Diameter MIPv6 Application [3] may optionally be included as part of the Diameter HMIPv6 Application.

An exemplary summary matrix of Diameter HMIPv6 Application Command Codes and AVPs is given below in Table 2:

| Diameter HMIP6 Application Command Codes and AVP's | Source | Destination | Purpose | Comment |
|---|---|---|---|---|
| HMIP6 specific command codes: | | | | |
| MAP-HMIPv6-Request Command (MAR) | AAAh | MAP | exchange of HMIP AVP's | MAP in home |
| | AAAh | MAP via AAAv | exchange of HMIP AVP's | MAP in visited |
| MAP-HMIPv6-Answer Command (MAA) | MAP | AAAh | exchange of HMIP AVP's | MAP in home |
| | MAP | AAAh via AAAv | exchange ofHMIP AVP's | MAP in visited |
| HMIPv6 specific AVP's: | | | | |
| HMIP-Binding-Update AVP | | | HMIP Binding Update message sent bv MN to MAP | |
| HMIP-Binding-acknowledgement AVP | | | HMIP Binding Acknowledgement sent by MAP to MN | |
| RCoA AVP | | | RCoA | |
| MAP Address AVP | | | MAP address | |
| HMIPv6-Feature-Vector AVP | | | | |
| MAP-Requested Flag | | | requests for a dynamic MAP assignment | |
| MAP-MN Pre-shared Key Generation Nonce AVP | | | seed for MN-MAP key | |
| MAP-MN Pre-shared Key AVP | | | assign MN-MAP key | |
| MAP IKE KeyID AVP | | | assign IKE KeyID | |
| MAP-MN IPSec SPI AVP | | | assign SPI | |
| MAP-MN IPSec Protocol AVP | | | assign IPSec Protocol | |
| MAP-MN IPSec Crypto AVP | | | assign IPSec Crypto | |
| MAP-MN IPSec Key Lifetime AVP | | | assign IPSec Key Lifetime | |
| Existing Diameter MIPv6 Application command codes: | | | | |
| AA-Registration-Request Command (ARR) | AAA Client | AAAh (via AAAv) | | |
| AA-Registration-Answer Command(ARA) | AAAh | AAA Client (via AAAv) | | |
| Home-Agent-MIPv6-Request Command (HOR) | AAAh | HA | | |
| Home-Agent-MIPv6-Answer Command (HOA) | HA | AAAh | | |
| Existing Diameter MIPv6 Application AVP's: | | | | |
| MIP-Binding-Update AVP | | | Mobile IP Binding Update message sent bv MN to HA | |
| MIP-Binding-acknowledgement AVP | | | Mobile IP Binding | |
| | | | Acknowledgement sent by HA to MN | |
| MIPv6-Mobile-Node-Address AVP | | | the Mobile Node's Home Address | |
| MIPv6-Home-Agent-Address AVP | | | the Mobile Node's Home Agent Address | |
| MIPv6-Feature-Vector AVP | | | | |
| Home-Agent-Requested Flag | | | requests for a dynamic home agent assignment | |

For additional information, the Internet draft [5] defines Command Codes and AVPs necessary to carry EAP packets between a Network Access Server (NAS) and a back-end authentication server.

### Exemplary signaling flows for Diameter HMIPv6 Application

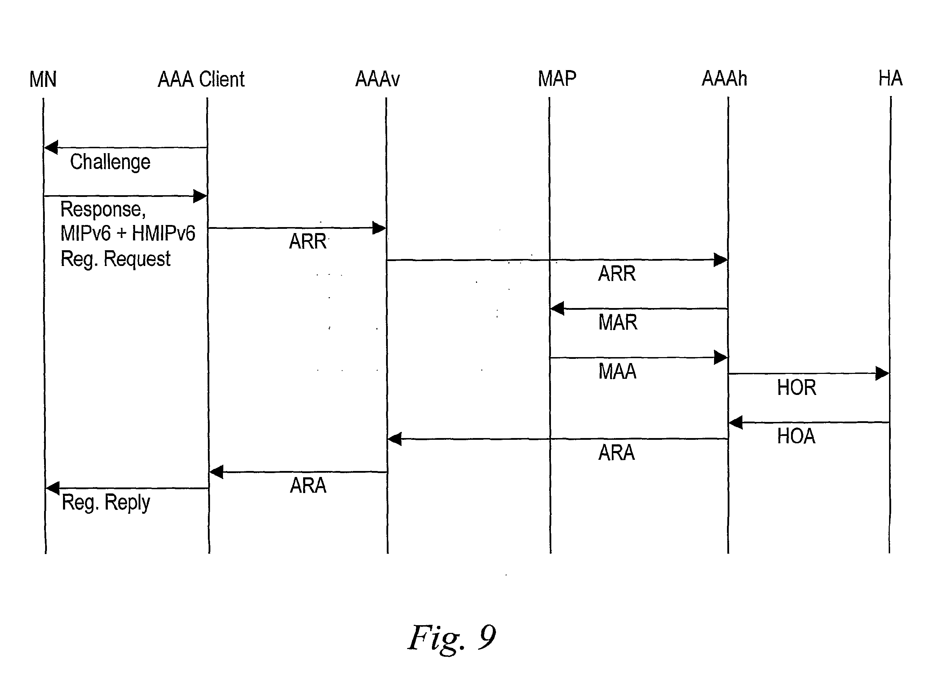

Fig. 9 illustrates an exemplary Diameter HMIPv6 Application signaling flow for the case when the MAP is located in the home network.

The AAA Client issues a challenge to the MN to be authenticated, for example via protocols such as the Internet Control Message Protocol (ICMP), PANA and so forth. The MN responds with a challenge response along with HMIPv6 and possibly also MIPv6 bootstrapping requests.

The AAA Client understands HMIPv6 and MIPv6 bootstrapping requests, and forwards the MN response to the AAAh via the AAA infrastructure using Diameter HMIPv6 Application command code (ARR). In the process, the AAA Client also includes the challenge to allow the AAAh to verify the authenticity of the MN.

The AAAh validates the MN's challenge response and if successful this means that the MN is authentic, and the AAAh then proceeds to process the MN's other requests.

First, the AAAh selects a MAP in the home network, and sends the MAP the appropriate Diameter HMIPv6 Application command code (MAR) containing e.g. security keys, and the MAP responds to the AAAh, preferably by providing information, if required or otherwise appropriate, for finalizing the security association with the MN via command code (MAA). Secondly, if MIPv6 bootstrapping is requested, the AAAh proceeds to service the MIPv6 bootstrapping request by selecting a HA using Diameter HMIPv6 Application command code (HOR), and the HA responds to the AAAh by providing information necessary to create the security association with the MN via command code (HOA). Note that it is possible to piggyback "MAP binding updates" as well as "HA binding updates" in the authentication and authorization exchanges. For this case, the HMIPv6 RCoA obtained by the AAAh in the first operation with the MAP is automatically MIPv6 binding updated with the HA in the second operation.

After the AAAh has communicated with the MAP and HA as described above, the AAAh sends the authorization (and/or configuration) information such as MAP address, RCoA, HA address, MN home address and security association information along with an authentication success indication back to the MN via Diameter HMIPv6 Application command code (ARA) and for example ICMP, PANA and so forth.

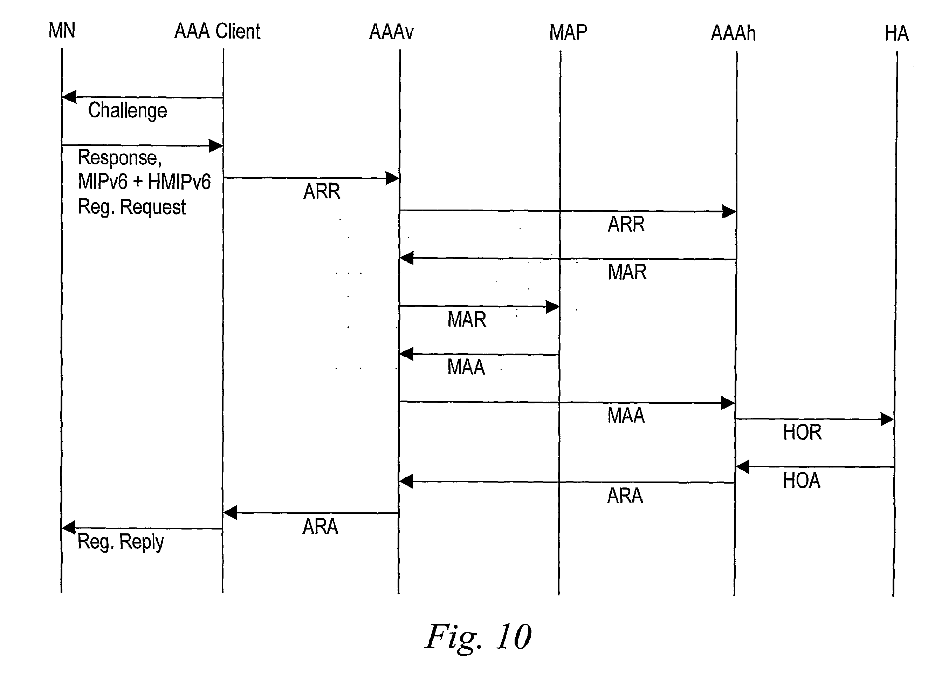

Fig. 10 illustrates an exemplary Diameter HMIPv6 Application signaling flow for the case when the MAP is located in the visited network.

The AAA Client issues a challenge to the MN to be authenticated, for example via ICMP or PANA. The MN responds with a challenge response along with HMIPv6 and possibly also MIPv6 bootstrapping requests.

The AAA Client understands HMIPv6 and MIPv6 bootstrapping requests, and forwards the MN response to the AAAh via the AAA infrastructure using Diameter HMIPv6 Application command code (ARR). In the process, the AAA Client also includes the challenge to allow the AAAh to verify the authenticity of the MN.

The AAAh validates the MN's challenge response and if successful this means that the MN is authentic, and the AAAh then proceeds to process the MN's other requests.

First, the AAAh forwards a request for MAP in the visited network to the appropriate AAAv, this is done via Diameter HMIPv6 Application command code (MAR). The AAAv selects a MAP in the visited network, and forwards the MAP the command code (MAR) which includes for example the security keys and the MAP responds to the AAAh via the AAAv, preferably by providing information, if required or otherwise appropriate, for finalizing the security association with the MN using command code (MAA). Secondly, if requested, the AAAh proceeds to service the MIPv6 bootstrapping request by selecting a HA using Diameter HMIPv6 Application command code (HOR), and the HA responds to the AAAh by providing information necessary to create the security association with the MN via command code (HOA). Note that it is possible to piggyback "MAP binding updates" as well as "HA binding updates" in the authentication and authorization exchanges. For this case, the HMIPv6 RCoA obtained by the AAAh in the first operation with the MAP is automatically MIPv6 binding updated with the HA in the second operation.

After the AAAh has communicated with the MAP and HA as described above, the AAAh sends the authorization (and/or configuration) information such as MAP address, RCoA, HA address, MN home address, and security association information along with an authentication success indication back to the MN via Diameter HMIPv6 Application command code (ARA) and a protocol such as ICMP or PANA.

Summarizing some of the above aspects, it can be seen that the reliance on the AAA infrastructure offers a number of possibilities for bootstrapping the HMIPv6 service. For example, it is possible to provide an extension to a general authentication protocol such as current or future EAP versions carried over the AAA infrastructure and/or to enhance an AAA framework protocol application such as Diameter and RADIUS applications.

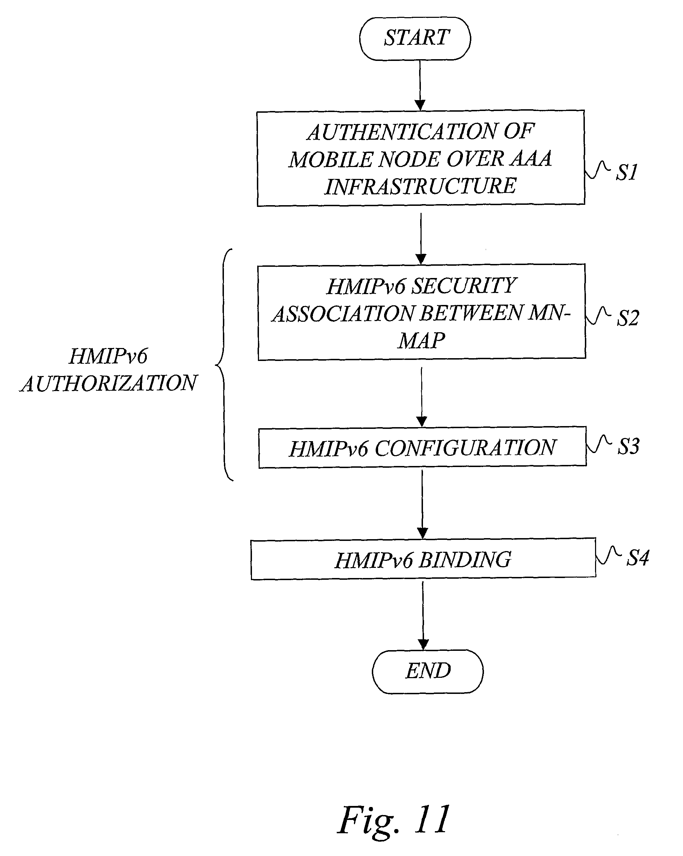

Fig. 11 is a schematic flow diagram of a basic example of a method for supporting HMIPv6 service for a mobile node. In this example, the information transfer and actions indicated in steps S1-S4 relate to authentication of the mobile node (S1), establishment of an MN-MAP security association (S2), HMIPv6 configuration (S3) and HMIPv6 binding (S4). The steps S2-S3 are commonly referred to as the authorization phase. The steps S1-S4 may, if desired, be executed more or less in parallel, for example piggy-backing the HMIPv6 binding in the same round trip as the HMIPv6 security association procedure, to allow shortening of the overall setup times. In step S1, information is transferred over the AAA infrastructure for authenticating the mobile node at the home network side. In step S2, HMIPv6-related information is transferred to immediately establish, or to enable future establishment of a security association between the MN and MAP. In step S3, additional HMIPv6 configuration is performed, for example by transferring configuration parameters to the mobile node for suitable storage therein. In step S4, the mobile node sends a binding update and a HMIPv6 binding is established in the MAP.

Among other application areas, the invention is applicable to all access networks such as WLAN, CDMA2000, WCDMA and so forth, where HMIPv6 and optionally also MIPv6 can be used, including technologies such as AAA and IPv6 mobility, systems such as CMS11, WCDMA and GSM systems, sub-systems such as service/application subsystems and terminals, and products such as AAA servers, Home Agent Servers and terminal nodes.

As an alternative to the above described example procedures for MN-HA key distribution, a mechanism similar to the current 3GPP2 solution in conjunction with the IKE framework can be used to distribute dynamic pre-shared keys for MN and HA.

The embodiments described above are merely given as examples, and it should be understood that the present invention is not limited thereto. Further modifications, changes and improvements which retain the basic underlying principles disclosed and claimed herein are within the scope of the invention.

### REFERENCES

[1] Mobility Support in IPv6, D. Johnson, C. Perkins, J. Arkko, June 30, 2003, <draft-ietf mobileip-ipv6-24.txt>.
[2] Hierarchical Mobile IPv6 mobility management (HMIPv6), Hesham Soliman, Claude Castelluccia, Karim E1-Malki, Ludovic Bellier, June, 2003, <draft-ietf-mobileip-hmipv6-08.txt>.
[3] Diameter Mobile IPv6 Application, Stefano M. Faccin, Franck Le, Basavaraj Patil, Charles E. Perkins, April 2003, <draft-le-aaa-diameter-mobileipv6-03.txt>.
[4] MIPv6 Authorization and Configuration based on EAP, G. Giaretta, I. Guardini, E. Demaria, February 2004, <draft-giaretta-mip6-authorization-eap-00.txt>.
[5] Diameter Extensible Authentication Protocol (EAP) Application, P. Eronen, T. Hiller, G. Zorn, February 16, 2004, <draft-ietf-aaa-eap-04.txt>.
[6] PPP Extensible Authentication Protocol (EAP), RFC2284, L. Blunk, J. Vollbrecht, March 1998.
[7] IEEE Standard 802.1X, Local and metropolitan area networks - Port-Based Network Access Control.
[8] Internet Security Association and Key Management Protocol (ISAKMP), RFC2408, D. Maughan, M. Schertler, M. Schneider, J. Turner, November 1998.
[9] Diameter Mobile IPv4 Application, P. Calhoun, T. Johansson, C. Perkins, 2003, <draft-ietf-aaa-diameter-mobileip-14.txt>.
[10] Remote Authentication Dial In User Service (RADIUS) - RFC2865, C. Rigney, S. Willens, A. Rubens, W. Simpson, June 2000.
[11] RADIUS Extensions - RFC2869, C. Rigney, W. Willats, P. Calhoun, June 2000.
[12] Extensible Authentication Protocol (EAP) - RFC2284, L. Blunk, J. Vollbrecht, B. Aboba, J. Carlson, H. Levkowetz, September 2003, <draft-ietf-eap-rfc2284bis-06.txt>.
[13] State Machines for EAP Peer and Authenticator, J. Vollbrecht, P. Eronen, N. Petroni, Y. Ohba, October 2003<draft-ietf-eap-statemachine-01.pdf>.

## Claims

1. A method of supporting Hierarchical Mobile IP version 6, HMIPv6, service for a mobile node (130), **characterized by** using an AAA infrastructure (110, 120, 122) to bootstrap the HMIPv6 service including:
said AAA infrastructure assigning an appropriate Mobility Anchor Point, MAP, (125) to the mobile node for the HMIPv6 service; and
transferring HMIPv6-related information required for authenticating and authorizing the mobile node for the HMIPv6 service with the assigned MAP over said AAA infrastructure.

2. The method of claim 1, **characterized in that** an AAA server of said AAA infrastructure assigns an appropriate MAP to the mobile node for the HMIPv6 service.

3. The method of claim 2, **characterized in that** the mobile node is roaming in a visited network, and an AAA visited network server, AAAv, (120) assigns a MAP (125) in the visited network to the mobile node (130) based on a policy of the visited network operator.

4. The method of claim 1, **characterized in that** an AAA infrastructure component of the home network generates credential-related data for security association between the mobile node and the assigned MAP and sends said credential-related data to the MAP, the AAA infrastructure home network component generates information for finalizing the security association or the MAP responds with information for finalizing the security association to the AAA infrastructure home network component, which sends HMIPv6 authorization information to the mobile node over the AAA infrastructure.

5. The method of claim 1, **characterized by** transferring HMIPv6-related information over said AAA infrastructure for establishing a HMIPv6 security association between the mobile node and the assigned MAP and for establishing a HMIPv6 binding for the mobile node, and wherein HMIPv6-related information for HMIPv6 binding is transferred in the same round trip as HMIPv6-related information for HMIPv6 security association.

6. The method of claim 1, **characterized in that** the mobile node is roaming in a visited network, and HMIPv6-related authentication and authorization information is transferred between the mobile node and an AAA home network server , AAAh, (110) within an authentication protocol in an end-to-end procedure transparent to the visited network.

7. The method of claim 6, **characterized in that** said authentication protocol is an extended Extensible Authentication Protocol , EAP, and said HMIPv6-related information is incorporated as additional data in the EAP protocol stack.

8. The method of claim 7, **characterized in that** said HMIPv6-related information is transferred in a generic container in the EAP protocol stack.

9. The method of claim 6, **characterized in that** the assigned MAP (125) is located in the visited network, and HMIPv6-related information is transferred between the mobile node and the AAA home network server, AAAh, within said authentication protocol, and HMIPv6-related information is transferred between the AAAh and the assigned MAP in the visited network within an AAA framework protocol application.

10. A system for supporting Hierarchical Mobile IP version 6 , HMIPv6, service for a mobile node, **characterized by**:
an AAA infrastructure component operable for assigning an appropriate Mobility Anchor Point, MAP, (125) to the mobile node (130) for the HMIPv6 service; and
means for transferring HMIPv6-related information required for authenticating and authorizing the mobile node for the HMIPv6 service with the assigned MAP over said AAA infrastructure.

11. The system of claim 10, **characterized in that** said AAA infrastructure component is an AAA server that is operable for assigning an appropriate MAP to the mobile node for the HMIPv6 service.

12. The system of claim 11, **characterized in that** the mobile node is roaming in a visited network, and an AAA visited network server , AAAv, (120) is operable for assigning a MAP (125) in the visited network to the mobile node (130) based on a policy of the visited network operator.

13. The system of claim 10, **characterized in that** an AAA infrastructure component of the home network comprises:
means for generating credential-related data for security association between the mobile node and the assigned MAP; and
means for sending said credential-related data to the assigned MAP;
means for receiving information from the MAP for finalizing the security association; and
means for sending HMIPv6 authorization information to the mobile node over the AAA infrastructure.

14. The system of claim 10, **characterized by** means for transferring HMIPv6-related information over said AAA infrastructure for establishing a HMIPv6 security association between the mobile node and the assigned MAP and for establishing a HMIPv6 binding for the mobile node, and wherein HMIPv6-related information for HMIPv6 binding is transferred in the same round trip as HMIPv6-related information for HMIPv6 security association.

15. The system of claim 10, **characterized in that** the mobile node is roaming in a visited network, and HMIPv6-related authentication and authorization information is transferred between the mobile node (130) and an AAA home network server, AAh, (110) within an authentication protocol in an end-to-end procedure transparent to the visited network.

16. The system of claim 15, **characterized in that** said authentication protocol is an extended Extensible Authentication Protocol, EAP, and said HMIPv6-related information is incorporated as additional data in the EAP protocol stack.

17. The system of claim 16, **characterized in that** said HMIPv6-related information is transferred in a generic container in the EAP protocol stack.

18. The system of claim 15, **characterized in that** the assigned MAP (125) is located in the visited network, and HMIPv6-related information is transferred between the mobile node and an AAA home network server, AAAh, (110) within said authentication protocol, and HMIPv6-related information is transferred between the AAAh and the assigned MAP (125) in the visited network within an AAA framework protocol application.

19. An AAA home network server, AAAh, (110) for supporting Hierarchical Mobile IP version 6, HMIPv6, service for a mobile node (130), **characterized by**:
means for assigning an appropriate Mobility Anchor Point, MAP, (125) to the mobile node for the HMIPv6 service; and
means for generating credential-related data for security association between the mobile node and a Mobility Anchor Point, MAP, (125) assigned by the AAA home network server, AAAh, (110); and
means for sending said credential-related data to the assigned MAP;
means for receiving information from the MAP for finalizing the security association; and
means for sending HMIPv6 authorization information including security association information to the mobile node.

20. The AAA home network server of claim 19, **characterized in that** said mobile node is roaming in a visited network, and said means for sending HMIPv6 authorization information is operable for sending the information over an AAA infrastructure linking the visited network with the home network of the mobile node.

21. The AAA home network server of claim 20, **characterized in that** said AAA home network server is configured for receiving, from the assigned MAP, information for finalizing the security association as well as binding address information, and said means for sending HMIPv6 authorization information over the AAA infrastructure is configured for sending HMIPv6 authorization information including MAP assignment information, binding address information and security association information to the mobile node.

22. A system for supporting Hierarchical Mobile IP version 6, HMIPv6, service for a mobile node, **characterized by** means for assigning an appropriate Mobility Anchor Point, MAP, (125) to the mobile node for the HMIPv6 service; and means for transferring HMIPv6-related authentication and authorization information in an Extensible Authentication Protocol EAP, between the mobile node and an AAA home network server over an AAA infrastructure for authenticating and authorizing the mobile node for the HMIPv6 service with the assigned MAP over said AAA infrastructure, said HMIPv6-related information being incorporated as additional data in the EAP protocol stack.

## Patentansprüche

1. Verfahren zur Unterstützung eines hierarchischen mobilen IP-Version 6-Dienstes, HMIPv6, für einen mobilen Knoten (130), **gekennzeichnet durch** Verwendung einer AAA-Infrastruktur (110, 120, 122) zum Urladen des HMIPv6-Dienstes, umfassend:
die AAA-Infrastruktur, welche dem mobilen Knoten einen geeigneten Mobilitätsverankerungspunkt MAP (125) für den HMIPv6-Dienst zuweist; und
Übertragen von HMIPv6-bezogenen Informationen, welche zum Authentifizieren und Autorisieren des mobilen Knotens für den HMIPv6-Dienst mit dem zugewiesenen MAP erforderlich sind, über die AAA-Infrastruktur.

2. Verfahren nach Anspruch 1, **dadurch gekennzeichnet, dass** ein AAA-Server der AAA-Infrastruktur dem mobilen Knoten für den HMIPv6-Dienst einen geeigneten MAP zuweist.

3. Verfahren nach Anspruch 2, **dadurch gekennzeichnet, dass** sich der mobile Knoten in einem besuchten Netz bewegt und ein AAA-Server des besuchten Netzes AAAv (120) dem mobilen Knoten (130) auf der Grundlage einer Richtlinie des Betreibers des besuchten Netzes einen MAP (125) in dem besuchten Netz zuweist.

4. Verfahren nach Anspruch 1, **dadurch gekennzeichnet, dass** eine AAA-Infrastrukturkomponente des Heimnetzes Berechtigungsnachweisdaten für eine Sicherheitsverbindung zwischen dem mobilen Knoten und dem zugewiesenen MAP erzeugt und die Berechtigungsnachweisdaten an den MAP sendet, die AAA-Infrastruktur-Heimnetz-Komponente Informationen zum Vollenden der Sicherheitsverbindung erzeugt oder der MAP mit Informationen zum Vollenden der Sicherheitsverbindung an die AAA-Infrastruktur-Heimnetz-Komponente reagiert, wobei HMIPv6-Autorisierungsinformationen über die AAA-Infrastruktur zum mobilen Knoten gesendet werden.

5. Verfahren nach Anspruch 1, **gekennzeichnet durch** Übertragen von HMIPv6-bezogenen Informationen über die AAA-Infrastruktur zum Errichten einer HMIPv6-Sicherheitsverbindung zwischen dem mobilen Knoten und dem zugewiesenen MAP und zum Errichten einer HMIPv6-Bindung für den mobilen Knoten, und wobei die HMIPv6-bezogenen Informationen für die HMIPv6-Bindung im gleichen Durchgang wie die HMIPv6-bezogenen Daten für die HMIPv6-Sicherheitsverbindung übertragen werden.

6. Verfahren nach Anspruch 1, **dadurch gekennzeichnet, dass** sich der mobile Knoten in einem besuchten Netz bewegt und die HMIPv6-bezogenen Authentifizierungs- und Autorisierungsinformationen innerhalb eines Authentifizierungsprotokolls in einer für das besuchte Netz transparenten End-zu-End-Prozedur zwischen dem mobilen Knoten und einem AAA-Heimnetz-Server AAAh (110) übertragen werden.

7. Verfahren nach Anspruch 6, **dadurch gekennzeichnet, dass** das Authentifizierungsprotokoll ein erweitertes Extensible Authentication Protocol EAP ist und die HMIPv6-bezogenen Informationen als zusätzliche Daten in dem EAP-Protokollstapel enthalten sind.

8. Verfahren nach Anspruch 7, **dadurch gekennzeichnet, dass** die HMIPv6-bezogenen Informationen in einem generischen Container in dem EAP-Protokollstapel übertragen werden.

9. Verfahren nach Anspruch 6, **dadurch gekennzeichnet, dass** der zugewiesene MAP (125) in dem besuchten Netz liegt und die HMIPv6-bezogenen Informationen zwischen dem mobilen Knoten und dem AAA-Heimnetz-Server AAAh innerhalb des Authentifizierungsprotokolls übertragen werden, und die HMIPv6-bezogenen Informationen zwischen dem AAAh und dem zugewiesenen MAP in dem besuchten Netzwerk innerhalb einer AAA-Rahmenprotokollanwendung übertragen werden.

10. System zur Unterstützung eines hierarchischen mobilen IP-Version 6-Dienstes, HMIPv6, für einen mobilen Knoten, **gekennzeichnet durch**:
eine AAA-Infrastruktur-Komponente, um dem mobilen Knoten (130) für den HMIPv6-Dienst einen geeigneten Mobilitätsverankerungspunkt MAP (125) zuzuweisen; und
eine Einrichtung zum Übertragen von HMIPv6-bezogenen Informationen, welche zum Authentifizieren und Autorisieren des mobilen Knotens für den HMIPv6-Dienst mit dem zugewiesenen MAP erforderlich sind, über die AAA-Infrastruktur.

11. System nach Anspruch 10, **dadurch gekennzeichnet, dass** die AAA-Infrastruktur-Komponente ein AAA-Server ist, der dem mobilen Knoten für den HMIPv6-Dienst einen geeigneten MAP zuweist.

12. System nach Anspruch 11, **dadurch gekennzeichnet, dass** sich der mobile Knoten in einem besuchten Netz bewegt und ein AAA-Server des besuchten Netzes AAAv (120) dem mobilen Knoten (130) auf der Grundlage einer Richtlinie des Betreibers des besuchten Netzes einen MAP (125) in dem besuchten Netz zuweist.

13. System nach Anspruch 10, **dadurch gekennzeichnet, dass** eine AAA-Infrastruktur-Komponente des Heimnetzes umfasst:
eine Einrichtung zum Erzeugen von Berechtigungsnachweisdaten für eine Sicherheitsverbindung zwischen dem mobilen Knoten und dem zugewiesenen MAP; und
eine Einrichtung zum Senden der Berechtigungsnachweisdaten an den zugewiesenen MAP;
eine Einrichtung zum Empfangen von Informationen vom MAP zum Vollenden der Sicherheitsverbindung; und
eine Einrichtung zum Senden der HMIPv6-Autorisierungsinformationen über die AAA-Infrastruktur zum mobilen Knoten.

14. System nach Anspruch 10, **gekennzeichnet durch** eine Einrichtung zum Übertragen von HMIPv6-bezogenen Informationen über die AAA-Infrastruktur zum Errichten einer HMIPv6-Sicherheitsverbindung zwischen dem mobilen Knoten und dem zugewiesenen MAP und zum Errichten einer HMIPv6-Bindung für den mobilen Knoten, und wobei die HMIPv6-bezogenen Informationen für die HMIPv6-Bindung im gleichen Durchgang wie die HMIPv6-bezogenen Informationen für die HMIPv6-Sicherheitsverbindung übertragen werden.

15. System nach Anspruch 10, **dadurch gekennzeichnet, dass** sich der mobile Knoten in einem besuchten Netz bewegt und die HMIPv6-bezogenen Authentifizierungs- und Autorisierungsinformationen innerhalb eines Authentifizierungsprotokolls in einer für das besuchte Netz transparenten End-zu-End-Prozedur zwischen dem mobilen Knoten (130) und einem AAA-Heimnetz-Server AAAh (110) übertragen werden.

16. System nach Anspruch 15, **dadurch gekennzeichnet, dass** das Authentifizierungsprotokoll ein erweitertes Extensible Authentication Protocol EAP ist und die HMIPv6-bezogenen Informationen als zusätzliche Daten in dem EAP-Protokollstapel enthalten sind.

17. System nach Anspruch 16, **dadurch gekennzeichnet, dass** die HMIPv6-bezogenen Informationen in einem generischen Container in dem EAP-Protokollstapel übertragen werden.

18. System nach Anspruch 15, **dadurch gekennzeichnet, dass** der zugewiesene MAP (125) in dem besuchten Netz liegt und die HMIPv6-bezogenen Informationen zwischen dem mobilen Knoten und einem AAA-Heimnetz-Server AAAh (110) innerhalb des Authentifizierungsprotokolls übertragen werden, und die HMIPv6-bezogenen Informationen zwischen dem AAAh und dem zugewiesenen MAP (125) in dem besuchten Netzwerk innerhalb einer AAA-Rahmenprotokollanwendung übertragen werden.

19. AAA-Heimnetz-Server AAAh (110) zur Unterstützung eines hierarchischen mobilen IP-Version 6-Dienstes, HMIPv6, für einen mobilen Knoten (130), **gekennzeichnet durch**:
eine Einrichtung, um dem mobilen Knoten für den HMIPv6-Dienst einen geeigneten Mobilitätsverankerungspunkt MAP (125) zuzuweisen; und
eine Einrichtung zum Erzeugen von Benutzungsnachweisdaten für eine Sicherheitsverbindung zwischen dem mobilen Knoten und einem Mobilitätsverankerungspunkt MAP (125), der von einem AAA-Heimnetz-Server AAAh (110) zugewiesen wird; und
eine Einrichtung zum Senden der Benutzungsnachweisdaten an den zugewiesenen MAP;
eine Einrichtung zum Empfangen von Informationen vom MAP zum Vollenden der Sicherheitsverbindung; und
eine Einrichtung zum Senden der HMIPv6-Autorisierungsinformationen einschließlich der Sicherheitsverbindungsinformationen an den mobilen Knoten.

20. AAA-Heimnetz-Server nach Anspruch 19, **dadurch gekennzeichnet, dass** sich der mobile Knoten in einem besuchten Netz bewegt und die Einrichtung zum Senden der HMIPv6-Autorisierungsinformationen dazu dient, die Informationen über eine AAA-Infrastruktur, welche das besuchte Netz mit dem Heimnetz des mobilen Knotens verbindet, zu senden.

21. AAA-Heimnetz-Server nach Anspruch 20, **dadurch gekennzeichnet, dass** der AAA-Heimnetz-Server ausgelegt ist zum Empfangen von Informationen zum Vollenden der Sicherheitsverbindung sowie von Bindungsadressen vom zugewiesenen MAP, und die Einrichtung zum Senden der HMIPv6-Autorisierungsinformationen über die AAA-Infrastruktur ausgelegt ist zum Senden der HMIPv6-Autorisierungsinformationen, einschließlich der MAP-Zuweisungsinformationen, der Bindungsadressen und der Sicherheitsverbindungsinformationen, an den mobilen Knoten.

22. System zur Unterstützung eines hierarchischen mobilen IP-Version 6-Dienstes, HMIPv6, für einen mobilen Knoten, **gekennzeichnet durch**
eine Einrichtung, um dem mobilen Knoten für den HMIPv6-Dienst einen geeigneten Mobilitätsverankerungspunkt MAP (125) zuzuweisen; und
eine Einrichtung zum Übertragen von HMIPv6-bezogenen Authentifizierungs- und Autorisierungsinformationen in einem Extensible Authentication Protocol EAP zwischen dem mobilen Knoten und einem AAA-Heimnetz-Server über eine AAA-Infrastruktur zum Authentifizieren und Autorisieren des mobilen Knotens für den HMIPv6-Dienst mit dem zugewiesenen MAP über die AAA-Infrastruktur, wobei die HMIPv6-bezogenen Informationen als zusätzliche Daten in dem EAP-Protokollstapel enthalten sind.

## Revendications

1. Procédé de support de service IP mobile hiérarchique de version 6, HMIPv6, pour un noeud mobile (130), **caractérisé par** l'utilisation d'une infrastructure AAA (110, 120, 122) pour amorcer le service HMIPv6 incluant :
ladite infrastructure AAA assignant un point d'ancrage de mobilité, MAP, (125) approprié au noeud mobile pour le service HMIPv6 ; et
transférant des informations relatives à HMIPv6 requises aux fins d'authentification et d'autorisation du noeud mobile pour le service HMIPv6 avec le MAP assigné par le biais de ladite infrastructure AAA.

2. Procédé selon la revendication 1, **caractérisé en ce qu'**un serveur AAA de ladite infrastructure AAA assigne un MAP approprié au noeud mobile pour le service HMIPv6.

3. Procédé selon la revendication 2, **caractérisé en ce que** le noeud mobile est itinérant dans un réseau visité, et un serveur de réseau visité AAA, AAAv, (120) assigne un MAP (125) dans le réseau visité au noeud mobile (130) sur la base d'une politique de l'opérateur du réseau visité.

4. Procédé selon la revendication 1, **caractérisé en ce qu'**un composant d'infrastructure AAA du réseau de rattachement génère des données relatives à un justificatif pour une association de sécurité entre le noeud mobile et le MAP assigné et envoie lesdites données relatives à un justificatif au MAP, le composant de réseau de rattachement d'infrastructure AAA génère des informations pour finaliser l'association de sécurité ou le MAP répond avec des informations pour finaliser l'association de sécurité au composant de réseau de rattachement d'infrastructure AAA, qui envoie des informations d'autorisation HMIPv6 au noeud mobile par le biais de l'infrastructure AAA.

5. Procédé selon la revendication 1, **caractérisé par** un transfert d'informations relatives à HMIPv6 par le biais de ladite infrastructure AAA pour établir une association de sécurité HMIPv6 entre le noeud mobile et le MAP assigné et pour établir une liaison HMIPv6 pour le noeud mobile, et dans lequel des informations relatives à HMIPv6 pour la liaison HMIPv6 sont transférées dans le même aller et retour que les informations relatives à HMIPv6 pour l'association de sécurité HMIPv6.

6. Procédé selon la revendication 1, **caractérisé en ce que** le noeud mobile est itinérant dans un réseau visité, et des informations d'authentification et d'autorisation relatives à HMIPv6 sont transférées entre le noeud mobile et un serveur de réseau de rattachement AAA, AAAh, (110) à l'intérieur d'un protocole d'authentification dans une procédure de bout en bout transparente pour le réseau visité.

7. Procédé selon la revendication 6, **caractérisé en ce que** ledit protocole d'authentification est un protocole d'authentification extensible, EAP, étendu, et lesdites informations relatives à HMIPv6 sont incorporées en tant que données supplémentaires dans la pile de protocole EAP.

8. Procédé selon la revendication 7, **caractérisé en ce que** lesdites informations relatives à HMIPv6 sont transférées dans un conteneur générique dans la pile de protocole EAP.

9. Procédé selon la revendication 6, **caractérisé en ce que** le MAP assigné (125) est situé dans le réseau visité, et les informations relatives à HMIPv6 sont transférées entre le noeud mobile et le serveur de réseau de rattachement AAA, AAAh, à l'intérieur dudit protocole d'authentification, et les informations relatives à HMIPv6 sont transférées entre le AAAh et le MAP assigné dans le réseau visité à l'intérieur d'une application de protocole de structure AAA.

10. Système de support de service IP mobile hiérarchique de version 6, HMIPv6, pour un noeud mobile, **caractérisé par** :
un composant d'infrastructure AAA utilisable pour assigner un point d'ancrage de mobilité, MAP, approprié (125) au noeud mobile (130) pour le service HMIPv6 ; et
un moyen pour transférer des informations relatives à HMIPv6 requises aux fins d'authentification et d'autorisation du noeud mobile pour le service HMIPv6 avec le MAP assigné par le biais de ladite infrastructure AAA.

11. Système selon la revendication 10, **caractérisé en ce que** ledit composant d'infrastructure AAA est un serveur AAA qui est utilisable pour assigner un MAP approprié au noeud mobile pour le service HMIPv6.

12. Système selon la revendication 11, **caractérisé en ce que** le noeud mobile est itinérant dans un réseau visité, et un serveur de réseau visité AAA, AAAv, (120) est utilisable pour assigner un MAP (125) dans le réseau visité au noeud mobile (130) sur la base d'une politique de l'opérateur du réseau visité.

13. Système selon la revendication 10, **caractérisé en ce qu'**un composant d'infrastructure AAA du réseau de rattachement comprend :
un moyen pour générer des données relatives à un justificatif pour une association de sécurité entre le noeud mobile et le MAP assigné ; et
un moyen pour envoyer lesdites données relatives à un justificatif au MAP assigné ;
un moyen pour recevoir des informations du MAP pour finaliser l'association de sécurité ; et
un moyen pour envoyer des informations d'autorisation HMIPv6 au noeud mobile par le biais de l'infrastructure AAA.

14. Système selon la revendication 10, **caractérisé par** un moyen pour transférer des informations relatives à HMIPv6 par le biais de ladite infrastructure AAA pour établir une association de sécurité HMIPv6 entre le noeud mobile et le MAP assigné et pour établir une liaison HMIPv6 pour le noeud mobile, et dans lequel les informations relatives à HMIPv6 pour la liaison HMIPv6 sont transférées dans le même aller et retour que les informations relatives à HMIPv6 pour l'association de sécurité HMIPv6.

15. Système selon la revendication 10, **caractérisé en ce que** le noeud mobile est itinérant dans un réseau visité, et des informations d'authentification et d'autorisation relatives à HMIPv6 sont transférées entre le noeud mobile (130) et un serveur de réseau de rattachement AAA, AAAh, (110) à l'intérieur d'un protocole d'authentification dans une procédure de bout en bout transparente pour le réseau visité.

16. Système selon la revendication 15, **caractérisé en ce que** ledit protocole d'authentification est un protocole d'authentification extensible, EAP, étendu, et lesdites informations relatives à HMIPv6 sont incorporées en tant que données supplémentaires dans la pile de protocole EAP.

17. Système selon la revendication 16, **caractérisé en ce que** lesdites informations relatives à HMIPv6 sont transférées dans un conteneur générique dans la pile de protocole EAP.

18. Système selon la revendication 15, **caractérisé en ce que** le MAP assigné (125) est situé dans le réseau visité, et les informations relatives à HMIPv6 sont transférées entre le noeud mobile et un serveur de réseau de rattachement AAA, AAAh, (110) à l'intérieur dudit protocole d'authentification, et les informations relatives à HMIPv6 sont transférées entre le AAAh et le MAP assigné (125) dans le réseau visité à l'intérieur d'une application de protocole de structure AAA.

19. Serveur de réseau de rattachement AAA, AAAh, (110) pour supporter un service mobile hiérarchique IP de version 6, HMIPv6, pour un noeud mobile (130), **caractérisé par** :
un moyen pour assigner un point d'ancrage de mobilité, MAP, approprié (125) au noeud mobile pour le service HMIPv6 ; et
un moyen pour générer des données relatives à un justificatif pour une association de sécurité entre le noeud mobile et un point d'ancrage de mobilité, MAP, (125) assigné par le serveur de réseau de rattachement AAA, AAAh, (110) ; et
un moyen pour envoyer lesdites données relatives à un justificatif au MAP assigné ;
un moyen pour recevoir des informations du MAP pour finaliser l'association de sécurité ; et
un moyen pour envoyer des informations d'autorisation HMIPv6 incluant des informations d'association de sécurité au noeud mobile.

20. Serveur de réseau de rattachement AAA selon la revendication 19, **caractérisé en ce que** ledit noeud mobile est itinérant dans un réseau visité, et ledit un moyen pour envoyer des informations d'autorisation HMIPv6 est utilisable pour envoyer les informations par le biais d'une infrastructure AAA reliant le réseau visité au réseau de rattachement du noeud mobile.

21. Serveur de réseau de rattachement AAA selon la revendication 20, **caractérisé en ce que** ledit serveur de réseau de rattachement AAA est configuré pour recevoir, du MAP assigné, des informations pour finaliser l'association de sécurité ainsi que des informations d'adresse de liaison, et ledit moyen pour envoyer des informations d'autorisation HMIPv6 par le biais de l'infrastructure AAA est configuré pour envoyer des informations d'autorisation HMIPv6 incluant des informations d'assignement de MAP, des informations d'adresse de liaison et des informations d'association de sécurité au noeud mobile.

22. Système de support de service mobile hiérarchique IP de version 6, HMIPv6, pour un noeud mobile, **caractérisé par** un moyen pour assigner un point d'ancrage de mobilité, MAP, approprié (125) au noeud mobile pour le service HMIPv6 ; et
un moyen pour transférer des informations d'authentification et d'autorisation relatives à HMIPv6 dans un protocole d'authentification extensible, EAP,
entre le noeud mobile et un serveur de réseau de rattachement AAA par le biais d'une infrastructure AAA aux fins d'authentification et d'autorisation du noeud mobile pour le service HMIPv6 avec le MAP assigné par le biais de ladite infrastructure AAA, lesdites informations relatives à HMIPv6 étant incorporées en tant que données supplémentaires dans la pile de protocole EAP.
